(19) Europäisches Patentamt
European Patent Office
Office européen des brevets

(11) EP 2 829 574 B1

(12) EUROPEAN PATENT SPECIFICATION

(45) Date of publication and mention of the grant of the patent:
**19.09.2018 Bulletin 2018/38**

(21) Application number: **13764049.6**

(22) Date of filing: **26.02.2013**

(51) Int Cl.:
***C08L 69/00*** (2006.01) ***C08G 64/08*** (2006.01)
***C08L 101/00*** (2006.01) ***F21V 3/00*** (2015.01)
***F21V 3/04*** (2018.01) ***G02B 5/02*** (2006.01)

(86) International application number:
**PCT/JP2013/055765**

(87) International publication number:
**WO 2013/141005 (26.09.2013 Gazette 2013/39)**

# (54) LIGHT-DIFFUSIBLE RESIN COMPOSITION

LICHTDIFFUNDIERBARE HARZZUSAMMENSETZUNG

COMPOSITION DE RÉSINE À DIFFUSIBILITÉ LUMINEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.03.2012 JP 2012064052**

(43) Date of publication of application:
**28.01.2015 Bulletin 2015/05**

(73) Proprietor: **Teijin Limited**
**Osaka-shi, Osaka 541-0054 (JP)**

(72) Inventors:
- **MIYAKE, Toshiyuki**
  **Tokyo 100-0013 (JP)**
- **SHINAGAWA, Asuka**
  **Tokyo 100-0013 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**EP-A1- 2 801 589**
**JP-A- H1 046 022**
**JP-A- H1 046 022**
**JP-A- 2006 518 803**
**JP-A- 2006 523 243**
**JP-A- 2011 102 364**
**US-A1- 2005 187 372**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 829 574 B1

**Description**

TECHNICAL FIELD

The present invention relates to a light-diffusing resin composition. More specifically, it relates to a light-diffusing resin composition which is excellent in light diffusion property, heat stability and hue and can be advantageously used for lighting covers, diffusion plates for displays and glass substitutes.

BACKGROUND ART

Materials prepared by dispersing an organic or inorganic light diffusing agent in a transparent resin such as an aromatic polycarbonate resin, acrylic resin or styrene resin have been widely used in application fields in which light diffusion property is required, such as lighting covers, displays, car meters and face plates. Out of these transparent resins, aromatic polycarbonate resins are widely used as resins having excellent mechanical properties, heat resistance and weatherability and high light transmittance.

Organic particles having a crosslinked structure are used as the light diffusing agent, and examples thereof include crosslinked acrylic particles, crosslinked silicone-based particles and crosslinked styrene-based particles. Further, inorganic particles such as calcium carbonate, barium sulfate, aluminum hydroxide, silicon dioxide, titanium oxide and calcium fluoride, and inorganic fibers such as glass short fibers are also used. Demand for materials obtained by dispersing a light diffusing agent in an aromatic polycarbonate resin is growing along with the increasing use of LED's as light sources as they have excellent heat resistance and mechanical properties. However, the further improvement of optical properties for the purpose of improving LED luminance efficiency is required for these materials.

It is known that hue derived from the decomposition of a resin and light transmittance associated with it are improved by blending a stabilizer with a light-diffusing resin composition (patent documents 1 and 2).

Meanwhile, a method of improving the optical properties of a light-diffusing resin composition by using a special polycarbonate copolymer is disclosed. Patent documents 3 and 4 propose to provide a light-diffusing polycarbonate-based resin composition having excellent brightness and color by improving flowability at the time of molding by means of a special polycarbonate. However, they merely suppress the decomposition of the resin by improving melt flowability and do not improve optical properties by using the special polycarbonate. The light-diffusing resin compositions are not satisfactory in terms of light diffusion property and must be further improved.

Patent document 5 propose to provide a light-diffusing resin composition having high light transmittance and high haze (ratio of diffused light transmittance to total light transmittance) by using an aromatic polycarbonate containing polycarbonate and polyorganosiloxane blocks and a bead-like crosslinked acrylic resin. However, this patent document 5 is silent about the improvement of hue, and the above light-diffusing resin composition is not satisfactory in terms of light diffusion property and must be further improved.

Patent document 6 discloses a translucent polycarbonate-polydiorganosiloxane copolymer in which polydiorganosiloxane domains having an average size of 20 to 45 nm are existent in a polycarbonate matrix. However, patent document 6 does not take light diffusion property into consideration at all.

(Patent Document 1) JP-A 2001-214049
(Patent Document 2) JP-A 2001-323149
(Patent Document 3) JP-A 2007-302793
(Patent Document 4) JP-A 2007-16079
(Patent Document 5) JP-A 10-46022
(Patent Document 6) WO2004/076541

DISCLOSURE OF THE INVENTION

It is an object of the present invention to provide a resin composition which is excellent in light diffusion property and hue and a molded article thereof. Stated more specifically, the present invention aims at improving LED luminance efficiency. The inventors of the present invention conducted intensive studies to attain this object and found that a resin composition having excellent light diffusion property and hue is obtained by combining a specific polycarbonate with a light diffusing agent. The present invention was accomplished based on this finding.

That is, according to the present invention, there is provided a light-diffusing resin composition which comprises 100 parts by weight of a resin component containing a polycarbonate (component A) and a polycarbonate-polydiorganosiloxane copolymer (component B) and 0.05 to 10.0 parts by weight of a light diffusing agent (component C), wherein the component B is a polycarbonate-polydiorganosiloxane copolymer in which polydiorganosiloxane domains having an average size of 0.5 to 40 nm are existent in a polycarbonate matrix, wherein the component C is silicone crosslinked

particles having an average particle diameter of 0.01 to 50 μm.

## BRIEF DESCRIPTION OF THE DRAWINGS

Fig. 1 is a schematic diagram showing a method of measuring light diffusivity in the present invention.

Explanation of symbols

- A plate-like test specimen
- B light source
- γ diffusion light angle

## BEST MODE FOR CARRYING OUT THE INVENTION

The present invention is described in detail hereinunder.

<component A: polycarbonate>

The polycarbonate (component A) is obtained by reacting a dihydroxy compound with a carbonate precursor by interfacial polycondensation or melt transesterification. It is also obtained by polymerizing a carbonate prepolymer by solid-phase transesterification, or by ring-opening polymerizing a cyclic carbonate compound.

The dihydroxy compound as used herein may be a bisphenol or an aliphatic diol if it is used as a dihydroxy component for a polycarbonate.

Examples of the bisphenol include 4,4'-dihydroxybiphenyl, bis(4-hydroxyphenyl)methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl)propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl)propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyl diphenol, 4,4'-dihydroxydiphenyl sulfoxide, 4,4'-dihydroxydiphenyl sulfide, 2,2'-dimethyl-4,4'-sulfonyl diphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyl diphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.$0^{2,6}$]decane, 4,4'-(1,3-adamantanediyl)diphenol and 1,3-bis(4-hydroxyphenyl)-5,7-dimethyladamantane.

Examples of the aliphatic diol include 2,2-bis-(4-hydroxycyclohexyl)-propane, 1,14-tetradecanediol, octaethylene glycol, 1,16-hexadecanediol, 4,4'-bis(2-hydroxyethoxy)biphenyl, bis{(2-hydroxyethoxy)phenyl}methane, 1,1-bis{(2-hydroxyethoxy)phenyl}ethane, 1,1-bis{(2-hydroxyethoxy)phenyl}-1-phenylethane, 2,2-bis{(2-hydroxyethoxy)phenyl}propane, 2,2-bis{(2-hydroxyethoxy)-3-methylphenyl}propane, 1,1-bis{(2-hydroxyethoxy)phenyl}-3,3,5-trimethylcyclohexane, 2,2-bis{4-(2-hydroxyethoxy)-3,3'-biphenyl}propane, 2,2-bis{(2-hydroxyethoxy)-3-isopropylphenyl}propane, 2,2-bis{3-t-butyl-4-(2-hydroxyethoxy)phenyl}propane, 2,2-bis{(2-hydroxyethoxy)phenyl}butane, 2,2-bis{(2-hydroxyethoxy)phenyl}-4-methylpentane, 2,2-bis{(2-hydroxyethoxy)phenyl}octane, 1,1-bis{(2-hydroxyethoxy)phenyl}decane, 2,2-bis{3-bromo-4-(2-hydroxyethoxy)phenyl}propane, 2,2-bis{3,5-dimethyl-4-(2-hydroxyethoxy)phenyl}propane, 2,2-bis{3-cyclohexyl-4-(2-hydroxyethoxy)phenyl}propane, 1,1-bis{3-cyclohexyl-4-(2-hydroxyethoxy)phenyl} cyclohexane, bis{(2-hydroxyethoxy)phenyl}diphenylmethane, 9,9-bis{(2-hydroxyethoxy)phenyl}fluorene, 9,9-bis{4-(2-hydroxyethoxy)-3-methylphenyl}fluorene, 1,1-bis{(2-hydroxyethoxy)phenyl}cyclohexane, 1,1-bis{(2-hydroxyethoxy)phenyl}cyclopentane, 4,4'-bis(2-hydroxyethoxy)diphenyl ether, 4,4'-bis(2-hydroxyethoxy)-3,3'-dimethyldiphenyl ether, 1,3-bis[2-{(2-hydroxyethoxy)phenyl}propyl]benzene, 1,4-bis[2-{(2-hydroxyethoxy)phenyl}propyl]benzene, 1,4-bis{(2-hydroxyethoxy)phenyl}cyclohexane, 1,3-bis{(2-hydroxyethoxy)phenyl}cyclohexane, 4,8-bis{(2-hydroxyethoxy)phenyl}tricyclo[5.2.1.$0^{2,6}$] decane, 1,3-bis{(2-hydroxyethoxy)phenyl}-5,7-dimethyladamantane, 3,9-bis(2-hydroxy-1,1-dimethylethyl)-2,4,8,10-tetraoxaspiro(5,5)undecane, 1,4:3,6-dianhydro-D-sorbitol (isosorbide), 1,4:3,6-dianhydro-D-mannitol (isomannide) and 1,4:3,6-dianhydro-L-iditol (isoidide).

Out of these, aromatic bisphenols are preferred, and 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyldiphenol, 9,9-bis(4-hydroxy-3-methylphenyl)fluorene, 1,3-bis{2-(4-hydroxyphenyl)propyl}benzene and 1,4-bis{2-(4-hydroxyphenyl)propyl}benzene are more preferred. 2,2-bis(4-hydroxyphenyl)propane, 1,1-bis(4-hydroxyphenyl)cyclohexane, 4,4'-sulfonyldiphenol and 9,9-bis(4-hydroxy-3-methylphenyl)fluorene are particularly preferred. 2,2-bis(4-hydroxyphenyl)propane having high strength and high durability is most preferred. They may be used alone or in combination of two or more.

The polycarbonate (component A) may be changed to a branched polycarbonate by using a branching agent in combination with the above dihydroxy compound. A polyfunctional aromatic compound having 3 or more functional groups used for the branched polycarbonate is phloroglucin, phloroglucide, a trisphenol such as 4,6-dimethyl-2,4,6-tris(4-hydroxyphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl) ethane, 2,6-bis(2-hydroxy-5-methylbenzyl)-4-methylphenol or 4-{4-[1,1-bis(4-hydroxyphenyl)ethyl]benzene}-α,α-dimethy lbenzylphenol, tetra(4-hydroxyphenyl)methane, bis(2,4-dihydroxyphenyl)ketone, 1,4-bis(4,4-dihydroxytriphenylmethyl)benzene, or trimellitic acid, pyromellitic acid, benzophenone tetracarboxylic acid or acid chloride thereof. Out of these, 1,1,1-tris(4-hydroxyphenyl)ethane and 1,1,1-tris(3,5-dimethyl-4-hydroxyphenyl)ethane are preferred, and 1,1,1-tris(4-hydroxyphenyl)ethane is particularly preferred.

These polycarbonates are produced by reaction means known per se for producing an ordinary polycarbonate, for example, reacting an aromatic dihydroxy component with a carbonate precursor such as phosgene or a diester carbonate. A brief description is given of basic means for this production process.

A reaction in which phosgene is used as the carbonate precursor is generally carried out in the presence of an acid binder and a solvent. As the acid binder may be used an alkali metal hydroxide such as sodium hydroxide or potassium hydroxide, or an amine compound such as pyridine. As the solvent may be used a halogenated hydrocarbon such as methylene chloride or chlorobenzene. A catalyst such as a tertiary amine or a quaternary ammonium salt may be used to promote the reaction. The reaction temperature is generally 0 to 40°C, and the reaction time is several minutes to 5 hours.

A transesterification reaction in which a diester carbonate is used as the carbonate precursor is carried out by stirring an aromatic dihydroxy component and the diester carbonate in a predetermined ratio under heating in an inert gas atmosphere and distilling off the formed alcohol or phenol. The reaction temperature which differs according to the boiling point of the formed alcohol or phenol is generally 120 to 300 °C. The reaction is completed while the formed alcohol or phenol is distilled off by setting a reduced pressure from the beginning. A catalyst which is used for a transesterification reaction may be used to promote the reaction. Examples of the diester carbonate used in the above transesterification reaction include diphenyl carbonate, dinaphthyl carbonate, bis(diphenyl)carbonate, dimethyl carbonate, diethyl carbonate and dibutyl carbonate. Out of these, diphenyl carbonate is particularly preferred.

A terminal-sealing agent is preferably used in the polymerization reaction. The terminal-sealing agent is' used to control the molecular weight, and the obtained polycarbonate is superior in heat stability to a polycarbonate whose terminal is not sealed. Examples of the terminal-sealing agent include monofunctional phenols represented by the following formulas [5] to [7].

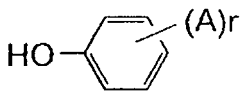
〔5〕

[In the above formula, A is a hydrogen atom, alkyl group having 1 to 9 carbon atoms, alkylphenyl group (alkyl moiety has 1 to 9 carbon atoms), phenyl group or phenylalkyl group (alkyl moiety has 1 to 9 carbon atoms), and "r" is an integer of 1 to 5, preferably 1 to 3.]

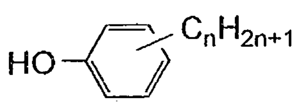
〔6〕

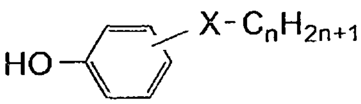
〔7〕

[In the above formulas, X is -R-O-, -R-CO-O- or -R-O-CO-. R is a single bond or a divalent aliphatic hydrocarbon group having 1 to 10, preferably 1 to 5 carbon atoms, and "n" is an integer of 10 to 50.]

Examples of the monofunctional phenol represented by the above formula (5) include phenol, isopropylphenol,

p-tert-butylphenol, p-cresol, p-cumylphenol, 2-phenylphenol, 4-phenylphenol and isooctylphenol. The monofunctional phenols represented by the above formulas [6] and [7] are phenols having a long-chain alkyl group or an aliphatic ester group as a substituent. When the terminal of the polycarbonate is sealed by using these, they not only serve as a terminal-sealing agent or a molecular weight control agent but also have the effects of improving the melt flowability of the resin to facilitate molding and reducing the water absorption coefficient of the resin. Therefore, they are preferably used.

The substituted phenol represented by the above formula [6] is preferably a phenol in which "n" is 10 to 30, particularly preferably 10 to 26. Examples thereof include decylphenol, dodecylphenol, tetradecylphenol, hexadecylphenol, octadecylphenol, eicosylphenol, docosylphenol and triacontylphenol.

The substituted phenol of the above formula [7] is suitably a compound in which X is -R-CO-O- and R is a single bond, preferably a compound in which "n" is 10 to 30, specifically 10 to 26, as exemplified by decyl hydroxybenzoate, dodecyl hydroxybenzoate, tetradecyl hydroxybenzoate, hexadecyl hydroxybenzoate, eicosyl hydroxybenzoate, docosyl hydroxybenzoate and triacontyl hydroxybenzoate.

Out of these monofunctional phenols, monofunctional phenols represented by the above formula [5] are preferred, alkyl-substituted or phenylalkyl-substituted phenols are more preferred, and p-tert-butylphenol, p-cumylphenol and 2-phenylphenol are particularly preferred. The monofunctional phenol terminal-sealing agent is desirably introduced into terminals which account for at least 5 mol%, preferably at least 10 mol% of the total of all the terminals of the obtained polycarbonate. The terminal-sealing agents may be used alone or in combination of two or more.

The polycarbonate (component A) may be a polyester carbonate obtained by copolymerizing an aromatic dicarboxylic acid, for example, terephthalic acid, isophthalic acid, naphthalenedicarboxylic acid or a derivative thereof as long as the object of the present invention is not impaired.

The viscosity average molecular weight of the polycarbonate (component A) is preferably 13,000 to 50,000, more preferably 16, 000 to 30, 000, much more preferably 18, 000 to 28, 000 and most preferably 19, 000 to 26, 000. When the molecular weight is higher than 50,000, melt viscosity becomes too high, whereby moldability may deteriorate, and when the molecular weight is lower than 13,000, there may occur a problem with mechanical strength. The viscosity average molecular weight M as used in the present invention is obtained by first measuring a solution prepared by dissolving 0.7 g of the polycarbonate in 100 ml of methylene chloride at 20°C with an Ostwald viscometer to calculate its specific viscosity from the following equation and then inserting the obtained specific viscosity into the following equation.

$$\text{Specific viscosity } (\eta_{sp}) = (t - t_0)/t_0$$

[$t_0$ is the number of seconds during which methylene chloride drops and t is the number of seconds during which a sample solution drops.]

$$\eta_{sp}/c = [\eta] + 0.45 \times [\eta]^2 c \text{ ([}\eta\text{] represents an intrinsic viscosity)}$$

$[\eta] = 1.23 \times 10^{-4} M^{0.83}$
$c = 0.7$

The total Cl (chlorine) content of the polycarbonate (component A) in the resin is preferably 0 to 200 ppm and more preferably 0 to 150 ppm. When the total Cl content of the polycarbonate exceeds 200 ppm, hue and heat stability may degrade.

(component B: polycarbonate-polydiorganosiloxane copolymer)

The polycarbonate-polydiorganosiloxane copolymer (component B) is a polycarbonate-polydiorganosiloxane copolymer in which polydiorganosiloxane domains having an average size of 0.5 to 40 nm are existent in the polycarbonate matrix. The average size of the polydiorganosiloxane domains is preferably 0.5 to 25 nm, more preferably 1.0 to 20 nm, much more preferably 1.0 to 18 nm and particularly preferably 5.0 to 15 nm. When the average size is small, the component B does not have the effect of improving hue, and when the average size is too large, the component B becomes cloudy, whereby total light transmittance may lower.

In consideration of the improvement of hue, the lower limit of the average size of the domains is preferably 5 nm, more preferably 8 nm.

The average size of the polydiorganosiloxane domains is measured by a small angle X-ray scattering (SAXS) method. The small angle X-ray scattering method is a method for measuring diffuse scattering diffraction which occurs in a small-angle area having a scattering angle (2θ) of less than 10°. In this small angle X-ray scattering method, when there are areas as large as 1 to 100 nm which differ in electron density in a substance, the diffuse scattering of an X-ray due to the difference in electron density is measured. The particle diameter of an object to be measured is obtained based on this scattering angle and the scattering intensity.

In the case of a polycarbonate-polydiorganosiloxane copolymer having an aggregation structure that the polydiorganosiloxane domains are dispersed in the polycarbonate matrix, the diffuse scattering of an X-ray occurs due to the difference in electron density between the polycarbonate matrix and the polydiorganosiloxane domains. A small-angle X-ray scattering profile is obtained by measuring scattering intensity I at each scattering angle (2θ) of less than 10° , and simulation is carried out by using commercially available analytical software to obtain the average size of the polydiorganosiloxane domains from provisional particle sizes and a provisional particle size distribution model based on the assumption that the polydiorganosiloxane domains are spherical domains and there exist variations in particle size distribution. According to the small angle X-ray scattering method, the average size of the polydiorganosiloxane domains dispersed in the polycarbonate matrix which cannot be measured accurately by observation through a transmission electron microscope can be measured accurately and easily with high reproducibility.

The component B is preferably a polycarbonate-polydiorganosiloxane copolymer containing a unit represented by the following formula [1] and a unit represented by the following formula [3].

(unit represented by the formula [1])

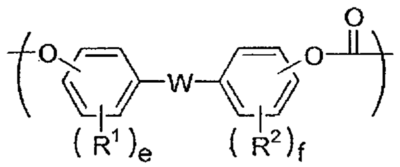

[1]

$R^1$ and $R^2$ are each independently a group selected from the group consisting of hydrogen atom, halogen atom, alkyl group having 1 to 18 carbon atoms, alkoxy group having 1 to 18 carbon atoms, cycloalkyl group having 6 to 20 carbon atoms, cycloalkoxy group having 6 to 20 carbon atoms, alkenyl group having 2 to 10 carbon atoms, aryl group having 3 to 14 carbon atoms, aryloxy group having 3 to 14 carbon atoms, aralkyl group having 7 to 20 carbon atoms, aralkyloxy group having 7 to 20 carbon atoms, nitro group, aldehyde group, cyano group and carboxyl group, and may be the same or different when there are a plurality of $R^1$'s and a plurality of $R^2$'s.

Examples of the halogen atom include fluorine atom, chlorine atom and bromine atom. Examples of the alkyl group having 1 to 18 carbon atoms include methyl group, ethyl group, butyl group, hexyl group and octyl group. Examples of the alkoxy group having 1 to 18 carbon atoms include methoxy group, ethoxy group, butoxy group, hexyloxy group and octyloxy group. Examples of the cycloalkyl group having 6 to 20 carbon atoms include cyclohexyl group and cyclooctyl group. Examples of the cycloalkoxy group having 6 to 20 carbon atoms include cyclohexyloxy group and cyclooctyloxy group. Examples of the alkenyl group having 2 to 10 carbon atoms include propenyl group, butenyl group, hexenyl group and octenyl group. Examples of the aryl group having 3 to 14 carbon atoms include phenyl group and naphthyl group. Examples of the aryloxy group having 3 to 14 carbon atoms include phenyloxy group and naphthyloxy group. Examples of the aralkyl group having 7 to 20 carbon atoms include benzyl group. Examples of the aralkyloxy group having 7 to 20 carbon atoms include benzyloxy group.

"e" and "f" are each an integer of 1 to 4.

W is a single bond or at least one group selected from the group consisting of groups represented by the following formulas [2].

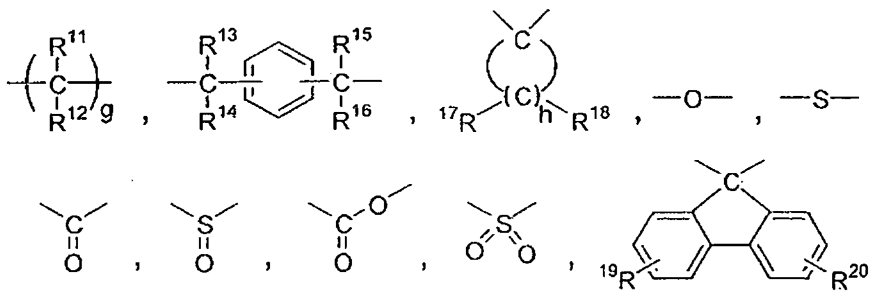

[2]

$R^{11}$, $R^{12}$, $R^{13}$, $R^{14}$, $R^{15}$, $R^{16}$, $R^{17}$ and $R^{18}$ are each independently a group selected from the group consisting of hydrogen atom, alkyl group having 1 to 18 carbon atoms, aryl group having 3 to 14 carbon atoms and aralkyl group having 7 to 20 carbon atoms.

Examples of the alkyl group having 1 to 18 carbon atoms include methyl group, ethyl group, butyl group, hexyl group and octyl group. Examples of the aryl group having 3 to 14 carbon atoms include phenyl group and naphthyl group. Examples of the aralkyl group having 7 to 20 carbon atoms include benzyl group.

$R^{19}$ and $R^{20}$ are each independently a group selected from the group consisting of hydrogen atom, halogen atom, alkyl group having 1 to 18 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 3 to 14 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group. When there are a plurality of $R^{19}$'s and a plurality of $R^{20}$'s, they may be the same or different.

Examples of the halogen atom include fluorine atom, chlorine atom and bromine atom. Examples of the alkyl group having 1 to 18 carbon atoms include methyl group, ethyl group, butyl group, hexyl group and octyl group. Examples of the alkoxy group having 1 to 10 carbon atoms include methoxy group, ethoxy group, butoxy group, hexyloxy group and octyloxy group.

Examples of the cycloalkyl group having 6 to 20 carbon atoms include cyclohexyl group and cyclooctyl group. Examples of the cycloalkoxy group having 6 to 20 carbon atoms include cyclohexyloxy group and cyclooctyloxy group. Examples of the alkenyl group having 2 to 10 carbon atoms include propenyl group, butenyl group, hexenyl group and octenyl group. Examples of the aryl group having 3 to 14 carbon atoms include phenyl group and naphthyl group. Examples of the aryloxy group having 6 to 10 carbon atoms include phenyloxy group and naphthyloxy group. Examples of the aralkyl group having 7 to 20 carbon atoms include benzyl group. Examples of the aralkyloxy group having 7 to 20 carbon atoms include benzyloxy group.

"g" is an integer of 1 to 10, and "h" is an integer of 4 to 7.

Examples of the dihydric phenol (I) deriving the unit represented by the above formula [1] include 4,4'-dihydroxybiphenyl, bis(4-hydroxyphenyl)methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl)propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl)propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyl diphenol, 4,4'-dihydroxydiphenyl sulfoxide, 4,4'-dihydroxydiphenyl sulfide, 2,2'-dimethyl-4,4'-sulfonyl diphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyl diphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.0$^{2,6}$]decane, 4,4'-(1,3-adamantanediyl)diphenol and 1,3-bis(4-hydroxyphenyl)-5,7-dimethyladamantane.

Out of these, 1.1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyl diphenol, 9,9-bis(4-hydroxy-3-methylphenyl)fluorene, 1,3-bis{2-(4-hydroxyphenyl)propyl}benzene and 1,4-bis{2-(4-hydroxyphenyl)propyl}benzene are preferred, and 2,2-bis(4-hydroxypheny)propane, 1,1-bis(4-hydroxyphenyl)cyclohexane, 4,4'-sulfonyldiphenol and 9,9-bis(4-hydroxy-3-methylphenyl)fluorene are particularly preferred. 2,2-bis(4-hydroxyphenyl)propane having high strength and high durability is most preferred. They may be used alone or in combination of two or more.

(unit represented by the formula [3])

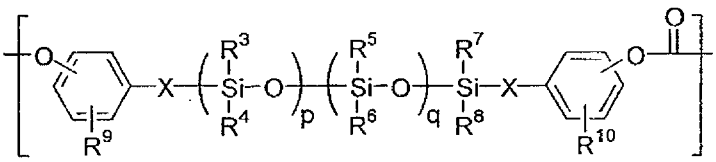

[3]

In the unit represented by the above formula [3], $R^3$, $R^4$, $R^5$, $R^6$, $R^7$ and $R^8$ are each independently a hydrogen atom, alkyl group having 1 to 12 carbon atoms, or substituted or nonsubstituted aryl group having 6 to 12 carbon atoms. Preferably, they are each a hydrogen atom, alkyl group having 1 to 6 carbon atoms, or substituted or nonsubstituted aryl group having 6 to 12 carbon atoms. Particularly preferably, they are each a hydrogen atom, alkyl group having 1 to 6 carbon atoms or phenyl group.

Examples of the alkyl group having 1 to 12 carbon atoms include methyl group, ethyl group, butyl group, hexyl group and octyl group. Examples of the substituted or nonsubstituted aryl group having 6 to 12 carbon atoms include phenyl group and naphthyl group. Examples of the substituent include alkyl groups having 1 to 6 carbon atoms such as methyl group, ethyl group and butyl group.

$R^9$ and $R^{10}$ are each independently a hydrogen atom, halogen atom, alkyl group having 1 to 10 carbon atoms or alkoxy group having 1 to 10 carbon atoms.

Examples of the halogen atom include fluorine atom, chlorine atom and bromine atom. Examples of the alkyl group having 1 to 10 carbon atoms include methyl group, ethyl group, butyl group, hexyl group and octyl group. Examples of the alkoxy group having 1 to 10 carbon atoms include methoxy group, ethoxy group, butoxy group, hexyloxy group and octyloxy group. Preferably, they are each a hydrogen atom or alkyl group having 1 to 10 carbon atoms. Particularly preferably, they are each a hydrogen atom or alkyl group having 1 to 4 carbon atoms.

"p" is a natural number, "q" is 0 or a natural number, and (p+q) is a natural number of not more than 150. "p" and "q" indicate the polymerization degrees of the diorganosiloxane. (p+q) is a natural number of not more than 150. (p+q) is preferably 3 to 120, more preferably 30 to 100, much more preferably 30 to 80 and particularly preferably 30 to 50.

X is a divalent aliphatic group having 2 to 8 carbon atoms. X is preferably an alkylene group having 1 to 10 carbon atoms such as ethylene group, trimethylene group, tetramethylene group or pentamethylene group as the divalent aliphatic group.

Compounds represented by the following formulas (I) are advantageously used as the dihydroxyaryl-terminated polydiorganosiloxane (II) deriving the unit represented by the above formula [3].

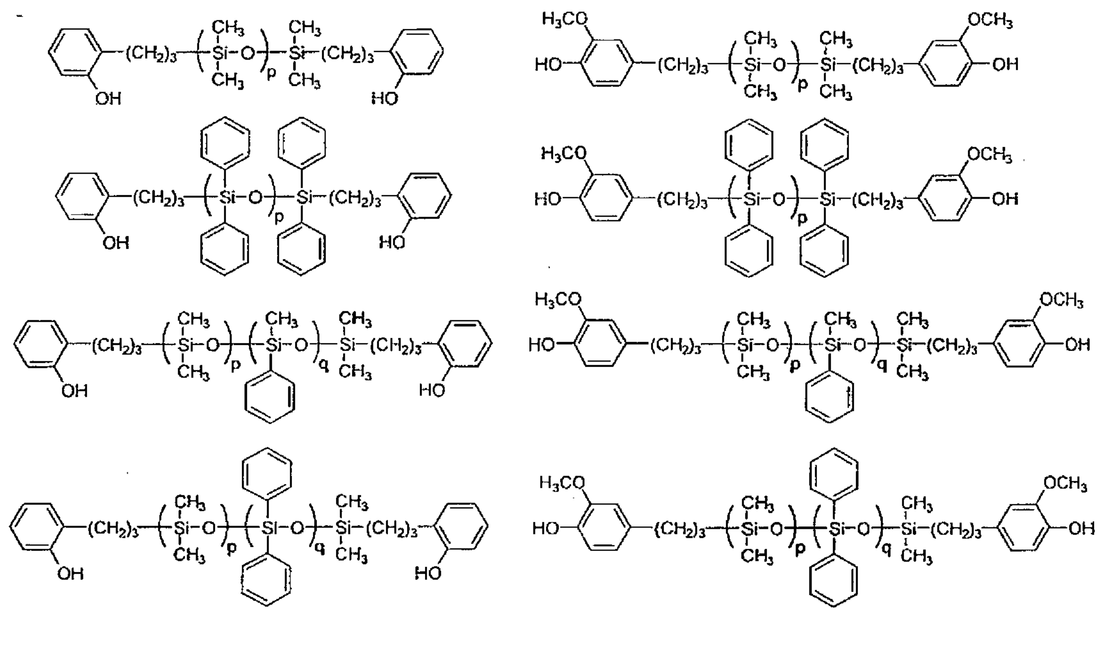

(I)

The content of the unit represented by the formula [3] is preferably 0.01 to 20.0 wt%, more preferably 0.01 to

10.0 wt%, much more preferably 2.0 to 10.0 wt% and most preferably 2.0 to 8.0 wt% based on the total weight of the polycarbonate-polydiorganosiloxane copolymer (component B) . When the content of the polydiorganosiloxane component is lower than 0.01 wt%, a hue effect becomes unsatisfactory, and when the content is higher than 20.0 wt%, total light transmittance may lower. The polymerization degree of the diorganosiloxane and the content of the polydiorganosiloxane component can be calculated by $^1$H-NMR measurement.

A description is subsequently given of the process of producing the polycarbonate-polydiorganosiloxane copolymer (component B).

A mixed solution of a chloroformate compound containing a chloroformate of the dihydric phenol (I) and/or a carbonate oligomer of the dihydric phenol (I) having a terminal chloroformate group is prepared by reacting the dihydric phenol (I) with a chloroformate forming compound such as phosgene or a chloroformate of the dihydric phenol (I) in a mixed solution of a water-insoluble organic solvent and an alkali aqueous solution in advance. Phosgene is preferred as the chloroformate forming compound.

To form the chloroformate compound from the dihydric phenol (I), the whole amount of the dihydric phenol (I) deriving the carbonate constituent unit represented by the above formula [1] may be converted into the chloroformate compound at a time, or part of the dihydric phenol (I) may be added as a post-addition monomer to the subsequent interfacial polycondensation reaction as a reaction raw material. The post-addition monomer is added to accelerate the subsequent polycondensation reaction and does not need to be added when not required.

This chloroformate compound forming reaction method is not particularly limited but preferably carried out in a solvent in the presence of an acid binder. A small amount of an antioxidant such as sodium sulfite or hydrosulfide may be further added as required and is preferably added.

The amount of the chloroformate forming compound may be suitably adjusted in consideration of the stoichiometric proportion (equivalent) of the reaction. When phosgene which is a preferred chloroformate forming compound is used, gasified phosgene is preferably blown into the reaction system.

As the above acid binder may be used an alkali metal hydroxide such as sodium hydroxide or potassium hydroxide, an alkali metal carbonate such as sodium carbonate or potassium carbonate, an organic base such as pyridine, or a mixture thereof.

The amount of the acid binder may also be suitably determined in consideration of the stoichiometric proportion (equivalent) of the reaction. More specifically, 2 equivalents or a little more than that of the acid binder is preferably used based on 1 mole (generally, 1 mole is equivalent to 2 equivalents) of the dihydric phenol (I) used to form the chloroformate compound of the dihydric phenol (I).

As the above solvent, various solvents which are inactive to the reaction and used to produce known polycarbonates may be used alone or as a mixture. Typical examples thereof include hydrocarbon solvents such as xylene and halogenated hydrocarbon solvents such as methylene chloride and chlorobenzene. Halogenated hydrocarbon solvents such as methylene chloride are particularly preferably used.

The pressure in the chloroformate compound forming reaction is not particularly limited and may be normal, increased or reduced pressure. In general, it is advantageous that the reaction should be carried out under normal pressure. The reaction temperature is selected from a range of -20 to 50°C. Since heat is generated by the reaction in most cases, water cooling or ice cooling is desirably carried out. Since the reaction time is affected by other conditions, it cannot be specified unconditionally but generally 0.2 to 10 hours.

The pH range in the chloroformate compound forming reaction can be set by making use of known interfacial reaction conditions and is generally adjusted to not less than 10.

In the production of the polycarbonate-polydiorganosiloxane copolymer (component B), after a mixed solution of a chloroformate compound containing a chloroformate of the dihydric phenol (I) and a carbonate oligomer of the dihydric phenol (I) having a terminal chloroformate group is prepared, the dihydroxyaryl-terminated polydiorganosiloxane (II) deriving the carbonate constituent unit represented by the formula [3] is added at a rate of not more than 0.01 mol/min based on 1 mole of the dihydric phenol (I) charged to prepare the above mixed solution while the mixed solution is stirred to carry out the interfacial polycondensation of the dihydroxyaryl-terminated polydiorganosiloxane (II) and the chloroformate compound so as to obtain a polycarbonate-polydiorganosiloxane copolymer.

The polycarbonate-polydiorganosiloxane copolymer (component B) can be changed to a branched polycarbonate-polydiorganosiloxane copolymer by using a branching agent in combination with the above dihydric phenol-based compound. Examples of the polyfunctional aromatic compound having 3 or more functional groups used for the branched polycarbonate include phloroglucin, phloroglucide, trisphenols such as 4,6-dimethyl-2,4,6-tris(4-hydroxydiphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol and 4-{4-[1,1-bis(4-hydroxyphenyl)ethyl]benzene}-$\alpha,\alpha$-dimethylbenzyl phenol, tetra(4-hydroxyphenyl)methane, bis(2,4-dihydroxyphenyl)ketone, 1,4-bis(4,4-dihydroxytriphenylmethyl)benzene, trimellitic acid, pyromellitic acid, benzophenonetetracarboxylic acid and acid chlorides thereof. Out of these, 1,1,1-tris(4-hydroxyphenyl)ethane and 1,1,1-tris(3,5-dimethyl-4-hydroxyphenyl)ethane are preferred, and 1,1,1-tris(4-hydroxyphenyl)ethane is particularly preferred.

The process for producing the branched polycarbonate-polydiorganosiloxane copolymer may be one in which a branching agent is contained in the mixed solution during a reaction for forming the chloroformate compound, or one in which a branching agent is added during the interfacial polycondensation reaction after the end of the forming reaction. The content of the carbonate constituent unit derived from the branching agent is preferably 0.005 to 1.5 mol%, more preferably 0.01 to 1.2 mol% and particularly preferably 0.05 to 1.0 mol% based on the total amount of all the carbonate constituent units constituting the copolymer resin. The amount of the branched structure can be calculated by $^1$H-NMR measurement.

Although the pressure in the polycondensation reaction system may be reduced, normal or increased pressure, the polycondensation reaction can be advantageously carried out under normal pressure or the own pressure of the reaction system. The reaction temperature is selected from a range of -20 to 50°C. Since heat is generated by polymerization in most cases, water cooling or ice cooling is desirably carried out. Since the reaction time differs according to the reaction temperature and other conditions, it cannot be specified unconditionally but generally 0.5 to 10 hours.

According to the circumstances, a polycarbonate-polydiorganosiloxane copolymer (component B) having a desired reduced viscosity [$\eta_{sp/c}$] can also be obtained by subjecting the obtained polycarbonate-polydiorganosiloxane copolymer to a suitable physical treatment (such as mixing or fractionation) and/or a chemical treatment (such as a polymer reaction, crosslinking or partial decomposition).

A polycarbonate-polydiorganosiloxane copolymer having desired purity (refining degree) can be collected by subjecting the obtained reaction product (crude product) to various known post-treatments such as separation and refinement.

The viscosity average molecular weight of the polycarbonate-polydiorganosiloxane copolymer (component B) is preferably $1.6 \times 10^4$ to $3.0 \times 10^4$, more preferably $1.6 \times 10^4$ to $2.5 \times 10^4$ and much more preferably $1.7 \times 10^4$ to 2.4 x 10. When the viscosity average molecular weight of the polycarbonate-polydiorganosiloxane copolymer is higher than the lower limit of the preferred range, a practical level of mechanical strength is obtained in many fields, and when it is lower than the upper limit, shear viscosity is low at a high shear speed and therefore the copolymer is advantageous in various molding techniques, especially injection molding.

The viscosity average molecular weight of the polycarbonate-polydiorganosiloxane copolymer (component B) is calculated as follows. The viscosity average molecular weight M is obtained by first measuring a solution prepared by dissolving 0.7 g of the polycarbonate-polydiorganosiloxane copolymer in 100 ml of methylene chloride at 20°C with an Ostwald viscometer to calculate its specific viscosity from the following equation and then inserting the obtained specific viscosity ($\eta_{sp}$) into the following equation.

$$\text{Specific viscosity } (\eta_{sp}) = (t - t^0)/t^0$$

[$t^0$ is the number of seconds during which methylene chloride drops and t is the number of seconds during which a sample solution drops.]

$$\eta_{sp}/c = [\eta] + 0.45 \times [\eta]^{2c} \text{ ([}\eta\text{] represents an intrinsic viscosity)}$$

$[\eta] = 1.23 \times 10^{-4} M^{0.83}$
$c = 0.7$

The content of the unit represented by the following formula [4] contained in the following formula [3] in the component B is preferably 0.001 to 1.0 wt%, more preferably 0.01 to 0.8 wt%, much more preferably 0.01 to 0.6 wt% and particularly preferably 0.01 to 0.2 wt% based on the total weight of the resin composition. When the content is lower than 0.001 wt%, the hue improving effect is not obtained, and when the content is higher than 1.0 wt%, total light transmittance may lower disadvantageously.

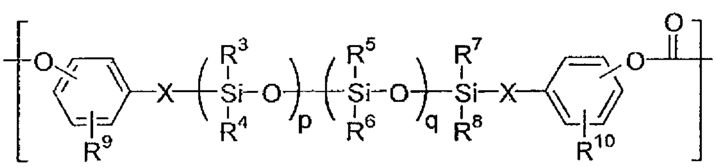 [3]

(In the above formula [3], $R^3$, $R^4$, $R^5$, $R^6$, $R^1$ and $R^8$ are each independently a hydrogen atom, alkyl group having 1 to 12 carbon atoms, or substituted or nonsubstituted aryl group having 6 to 12 carbon atoms, $R^9$ and $R^{10}$ are each independently a hydrogen atom, halogen atom, alkyl group having 1 to 10 carbon atoms or alkoxy group having 1 to 10 carbon atoms, "p" is a natural number, "q" is 0 or a natural number, and (p+q) is a natural number of not more than 150. X is a divalent aliphatic group having 2 to 8 carbon atoms.)

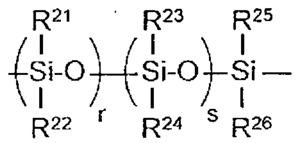 [4]

(In the formula [4], $R^{21}$, $R^{22}$, $R^{23}$, $R^{24}$, $R^{25}$ and $R^{26}$ are identical to $R^3$, $R^4$, $R^5$, $R^6$, $R^7$ and $R^8$ of the formula [3], respectively, and "r" and "s" are the same as "p" and "q" in the formula [3], respectively.)

The content of the component B in the resin component is adjusted to ensure that the content of the unit represented by the formula [4] in the component B falls within the above preferred range. The content of the component B is preferably 0.01 to 10.0 parts by weight, more preferably 0.01 to 5.0 parts by weight, much more preferably 0.1 to 5.0 parts by weight and particularly preferably 0.1 to 2.0 parts by weight based on 100 parts by weight of the resin component.

<component C: light diffusing agent>

The light diffusing agent (component C) is silicone crosslinked particles. The silicone crosslinked particles have an organic substituent at the silicon atom with a siloxane bond as the main skeleton. The crosslinked particles include crosslinked particles having a high degree of crosslinking typified by polyorganosilsesquioxane and crosslinked particles having a low degree of crosslinking typified by organosilicone rubber particles. The silicone crosslinked particles used in the present invention are preferably silicone crosslinked particles having a high degree of crosslinking typified by polyorganosilsesquioxane. This polyorganosilsesquioxane contains a trifunctional siloxane unit (to be simply referred to as "T unit" hereinafter) represented by $R\text{-}SiO_{3/2}$ (R is a monovalent organic group) in an amount of not less than 50 mol%, preferably not less than 90 mol% and much more preferably not less than 95 mol% based on 100 mol% of the total of mono-to tetra-functional siloxane units. Examples of the organic group bonded to the polyorganosilsesquioxane include alkyl groups having 1 to 18 carbon atoms, aryl groups such as phenyl group, tolyl group and xylyl group, aralkyl groups such as β-phenylethyl group and β-phenylpropyl group, and cyclohexyl group. Reactive groups typified by vinyl group, γ-glycidoxypropyl group and γ-methacryloxypropyl group may also be contained. Examples of the alkyl group having 1 to 18 carbon atoms include methyl group, ethyl group, n-propyl group, isopropyl group, n-butyl group, isobutyl group, tert-butyl group, decyl group, dodecyl group and octadecyl group. The alkyl group is an alkyl group having preferably 1 to 12, more preferably 1 to 10 carbon atoms. Methyl group is particularly preferred. Commercially available silicone-based light diffusing fine particles include the TOSPEARL series of Toshiba Silicone Co., Ltd., the TORAYFIL series of Dow Corning Toray Co., Ltd. and the silicone powders of Shin-Etsu Chemical Co., Ltd.

The light diffusing agent (component C) has an average particle diameter of 0.01 to 50 μm, more preferably 1 to 30 μm and much more preferably 2 to 30 μm. When the average particle diameter is smaller than 0.01 μm or larger than 50 μm, light diffusion property may become unsatisfactory. The average particle diameter indicates a 50 % value (D50) of an integral particle size distribution obtained by a laser diffraction/scattering method. The number of particle size distributions may be single or plural. That is, it is possible to combine two or more different kinds of light diffusing agents which differ in average particle diameter. However, a more preferred light diffusing agent has a narrow particle size distribution. A light diffusing agent having a distribution in which not less than 70 wt% of all particles are included in an average particle diameter range of around 2 μm is preferred. The shape of the light diffusing agent is preferably almost globular from the viewpoint of light diffusion property and more preferably almost spherical. The globular shape includes an elliptical shape.

The refractive index of the light diffusing agent (component C) is preferably 1.30 to 1.80, more preferably 1.33 to 1.70 and much more preferably 1.35 to 1.65. When it is contained in the resin composition, it exhibits a satisfactory light diffusing function.

The content of the light diffusing agent (component C) is 0.05 to 10.0 parts by weight, preferably 0.1 to 5.0 parts by weight, more preferably 0.1 to 2.0 parts by weight and much more preferably 0.1 to 1.0 part by weight based on 100 parts by weight of the resin component comprising the component A and the component B. When the content of the component C is low, satisfactory light diffusion property is not obtained, and when the content is too high, total light transmittance lowers.

<other additives>

Additives which are used to improve resin compositions are advantageously used to improve the flame retardancy, antioxidant properties, optical stability (ultraviolet stability), fluorescent brightening property, releasability and mold corrosion resistance of the resin composition of the present invention. A detailed description is subsequently given of these additives.

(I) Flame retardant

The resin composition of the present invention may be mixed with a compound which is known as a flame retardant for polycarbonates. Although flame retardancy is improved by mixing the compound, antistatic properties, flowability, stiffness and heat stability are improved based on the properties of the compound in addition to this. Examples of the flame retardant include (i) organic metal salt-based flame retardants (such as organic sulfonic acid alkali (earth) metal salts, organic boric acid metal salt-based flame retardants and organic stannic acid metal salt-based flame retardants), (ii) organic phosphorus-based flame retardants (such as organic group-containing monophosphate compounds, phosphate oligomer compounds, phosphonate oligomer compounds, phosphonitrile oligomer compounds and phosphonic acid amide compounds), (iii) silicone-based flame retardants comprising a silicone compound, and (iv) fibrillated PTFE. Out of these, organic metal salt-based flame retardants and organic phosphorus-based flame retardants are preferred.

(i) Organic metal salt-based flame retardant

The organic metal salt compound is an alkali (earth) metal salt of an organic acid having 1 to 50, preferably 1 to 40 carbon atoms, preferably an alkali (earth) metal salt of an organic sulfonic acid. Examples of this alkali (earth) metal salt of an organic sulfonic acid include metal salts of a fluorine-substituted alkylsulfonic acid such as metal salts of a perfluoroalkylsulfonic acid having 1 to 10, preferably 2 to 8 carbon atoms and an alkali metal or an alkali earth metal and metal salts of an aromatic sulfonic acid having 7 to 50, preferably 7 to 40 carbon atoms and an alkali metal or an alkali earth metal.

Examples of the alkali metal constituting the metal salt include lithium, sodium, potassium, rubidium and cesium. Examples of the alkali earth metal include beryllium, magnesium, calcium, strontium and barium. Alkali metals are more preferred. Out of these alkali metals, rubidium and cesium having a larger ion radius are preferred when the requirement for transparency is higher. However, as they cannot be used for all purposes and it is difficult to refine them, they may become disadvantageous in terms of cost. Meanwhile, metals having a smaller ion radius such as lithium and sodium may become disadvantageous in terms of flame retardancy. In consideration of these, an alkali metal contained in the sulfonic acid alkali metal salt may be selected according to purpose but a sulfonic acid potassium salt having good balance among properties is most preferred in all aspects. This potassium salt and a sulfonic acid alkali metal salt comprising another alkali metal may be used in combination.

Examples of the perfluoroalkylsulfonic acid alkali metal salt include potassium trifluoromethanesulfonate, potassium perfluorobutanesulfonate, potassium perfluorohexanesulfonate, potassium perfluorooctanesulfonate, sodium pentafluoroethanesulfonate, sodium perfluorobutanesulfonate, sodium perfluorooctanesulfonate, lithium trifluoromethanesulfonate, lithium perfluorobutanesulfonate, lithium perfluoroheptanesulfonate, cesium trifluoromethanesulfonate, cesium perfluorobutanesulfonate, cesium perfluorooctanesulfonate, cesium perfluorohexanesulfonate, rubidium perfluorobutanesulfonate and rubidium perfluorohexanesulfonate. They may be used alone or in combination of two or more. The number of carbon atoms of the perfluoroalkyl group is preferably 1 to 18, more preferably 1 to 10 and much more preferably 1 to 8. Out of these, potassium perfluorobutanesulfonate is particularly preferred.

In general, a fluoride ion ($F^-$) is contained in the perfluoroalkylsulfonic acid alkali (earth) metal salt comprising an alkali metal in no small measure. Since the existence of the fluoride ion may cause the deterioration of flame retardancy, it is preferably reduced as much as possible. The content of the fluoride ion can be measured by ion chromatography. The content of the fluoride ion is preferably not more than 100 ppm, more preferably not more than 40 ppm and particularly preferably not more than 10 ppm. It is advantageously not less than 0.2 ppm from the viewpoint of production efficiency.

A perfluoroalkylsufonic acid alkali (earth) metal salt whose fluoride ion content has been reduced can be produced by employing a known production process and a method for reducing the content of the fluoride ion, such as one in which the content of the fluoride ion in the raw material is reduced when a fluorine-containing organic metal salt is produced, one in which hydrogen fluoride obtained by a reaction is removed by a gas generated at the time of the reaction or heating, or one in which the amount of the fluoride ion is reduced by purification means such as recrystallization and reprecipitation in the production of a fluorine-containing organic metal salt. Since the organic metal salt-based flame retardant is relatively easily dissolved in water, it is preferably produced by using ion exchange water, especially water having an electric resistance of not less than 18 MΩ· cm, that is, an electric conductivity of about not more than 0.55

μS/cm to dissolve and clean it at a temperature higher than normal temperature and then cooling it for recrystallization.

Examples of the aromatic sulfonic acid alkali (earth) metal salt include disodium diphenylsulfide-4,4'-disulfonate, dipotassium diphenylsulfide-4,4'-disulfonate, potassium 5-sulfoisophthalate, sodium 5-sulfoisophthalate, polysodium polyethylene terephthalate polysulfonate, calcium 1-methoxynaphthalene-4-sulfonate, disodium 4-dodecylphenylether disulfonate, polysodium poly(2,6-dimethylphenyleneoxide)polysulfonate, polysodium poly(1,3-phenyleneoxide)polysulfonate, polysodium poly(1,4-phenyleneoxide)polysulfonate, polypotassium poly(2,6-diphenylphenyleneoxide)polysulfonate, lithium poly(2-fluoro-6-butylphenyleneoxide)polysulfonate, potassium sulfonate of benzenesulfonate, sodium benzenesulfonate, strontium benzenesulfonate, magnesium benzenesulfonate, dipotassium p-benzenedisulfonate, dipotassium naphthalene-2,6-disulfonate, calcium biphenyl-3,3'-disulfonate, sodium diphenylsulfone-3-sulfonate, potassium diphenylsulfone-3-sulfonate, dipotassium diphenylsulfone-3,3'-disulfonate, dipotassium diphenylsulfone-3,4'-disulfonate, sodium α,α,α-trifluoroacetophenone-4-sulfonate, dipotassium benzophenone-3,3'-disulfonate, disodium thiophene-2,5-disulfonate, dipotassium thiophene-2,5-disulfonate, calcium thiophene-2,5-disulfonate, sodium benzothiophenesulfonate, potassium diphenylsulfoxide-4-sulfonate, formalin condensate of sodium naphthalenesulfonate, and formalin condensate of sodium anthracenesulfonate.

Out of these aromatic sulfonic acid alkali (earth) metal salts, potassium salts are preferred. Out of these aromatic sulfonic acid alkali (earth) metal salts, potassium diphenylsulfone-3-sulfonate and dipotassium diphenylsulfone-3,3'-disulfonate are more preferred. A mixture thereof (the weight ratio of the former to the latter is 15/85 to 30/70) is particularly preferred.

Preferred organic metal salts except for the sulfonic acid alkali (earth) metal salts include alkali (earth) metal salts of a sulfuric acid ester and alkali (earth) metal salts of an aromatic sulfonamide. The alkali (earth) metal salts of a sulfuric acid ester include alkali (earth) metal salts of a sulfuric acid ester of a monohydric and/or polyhydric alcohol.

Examples of the sulfuric acid ester of a monohydric and/or polyhydric alcohol include methyl sulfuric acid esters, ethyl sulfuric acid esters, lauryl sulfuric acid esters, hexadecyl sulfuric acid esters, sulfuric acid esters of a polyoxyethylene alkylphenyl ether, mono-, di-, tri- and tetra-sulfuric acid esters of pentaerythritol, sulfuric acid esters of monoglyceride laurate, sulfuric acid esters of monoglyceride palmitate and sulfuric acid esters of monoglyceride stearate. Out of these alkali (earth) metal salts of sulfuric acid esters, alkali (earth) metal salts of a lauryl sulfuric acid ester are preferred.

The alkali (earth) metal salts of an aromatic sulfonamide include alkali (earth) metal salts of saccharin, N-(p-tolylsulfonyl)-p-toluenesulfoimide, N-(N'-benzylaminocarbonyl)sulfanilimide and N-(phenylcarboxyl)sulfanilimide.

The content of the organic metal salt-based flame retardant is preferably 0.001 to 1 part by weight, more preferably 0.005 to 0.5 part by weight, much more preferably 0.01 to 0.3 part by weight and particularly preferably 0.03 to 0.15 part by weight based on 100 parts by weight of the resin composition.

(ii) Organic phosphorus-based flame retardant

The organic phosphorus-based flame retardant is preferably an aryl phosphate compound. This is because the phosphate compound is generally excellent in hue. Since the phosphate compound has a plasticizing effect, it can improve moldability advantageously. Various phosphate compounds which have been known as flame retardants may be used as the phosphate compound. The content of the organic phosphorus-based flame retardant is preferably 0.01 to 20 parts by weight, more preferably 2 to 10 parts by weight and much more preferably 2 to 7 parts by weight based on 100 parts by weight of the resin composition.

(iii) Silicone-based flame retardant

A silicone compound which is used as the silicone-based flame retardant improves flame retardancy through its chemical reaction at the time of combustion. Various compounds which have been proposed as flame retardants for aromatic polycarbonate resins may be used as the compound. It is considered that the silicone compound provides a flame retarding effect to a polycarbonate by bonding itself or to a component derived from the resin at the time of combustion to form a structure or through a reduction reaction at the time of forming the structure. Therefore, it is preferred that the silicone compound should contain a group which is highly active in the reaction. Stated more specifically, it is preferred that the silicone compound should contain a predetermined amount of at least one group selected from an alkoxy group and hydrogen (that is, Si-H group). The content of the group (alkoxy group, Si-H group) is preferably 0.1 to 1.2 mol/100 g, more preferably 0.12 to 1 mol/100 g and much more preferably 0.15 to 0.6 mol/100 g. This content can be obtained by measuring the amount of hydrogen or an alcohol generated per unit weight of the silicone compound by an alkali decomposition method. The alkoxy group is preferably an alkoxy group having 1 to 4 carbon atoms, particularly preferably methoxy group. The structure of the silicone compound is generally constituted by combining the following four different siloxane units arbitrarily.

That is, they are:

M units: monofunctional siloxane units such as $(CH_3)_3SiO_{1/2}$, $H(CH_3)_2SiO_{1/2}$, $H_2(CH_3)SiO_{1/2}$, $(CH_3)_2(CH_2{=}CH)SiO_{1/2}$, $(CH_3)_2(C_6H_5)SiO_{1/2}$ and $(CH_3)$ $(C_6H_5)(CH_2{=}CH)SiO_{1/2}$
D units: bifunctional siloxane units such as $(CH_3)_2SiO$, H $(CH_3)$ SiO, $H_2SiO$, $H(C_6H_5)SiO$, $(CH_3)$ $(CH_2{=}CH)$ SiO and $(C_6H_5)_2SiO$
T units: trifunctional siloxane units such as $(CH_3)SiO_{3/2}$, $(C_3H_7)SiO_{3/2}$, $HSiO_{3/2}$, $(CH_2{=}CH)SiO_{3/2}$ and $(C_6H_5)SiO_{3/2}$
Q unit: tetrafunctional siloxane unit represented by $SiO_2$

The structure of the silicone compound used as the silicone-based flame retardant is represented by $D_n$, $T_p$, $M_mD_n$, $M_mT_p$, $M_mQ_q$, $M_mD_nT_p$, $M_mD_nQ_q$, $M_mT_pQ_q$, $M_mD_nP_pQ_q$, $D_nT_p$, $D_nQ_q$ or $D_nT_pQ_q$. Out of these, the structure of the silicone compound is represented by preferably $M_mD_n$, $M_mT_p$, $M_mD_nT_p$ or $M_mD_nQ_q$ and more preferably $M_mD_n$ or $M_mD_nT_p$.
The coefficients m, n, p and q in the above rational formulae are each an integer of not less than 1, indicating the polymerization degree of the siloxane unit, and the total of these coefficients in the formulae is the average polymerization degree of the silicone compound. The average polymerization degree is preferably 3 to 150, more preferably 3 to 80, much more preferably 3 to 60 and particularly preferably 4 to 40. Within the more preferred range, higher flame retardancy is obtained. As will be described hereinafter, a silicone compound containing a predetermined amount of an aromatic group is also excellent in transparency and hue. As a result, good reflected light is obtained. When any one of m, n, p and q is not less than 2, two or more of the siloxane units having this coefficient differ in the hydrogen atom or organic residue bonded thereto.
The silicone compound may have a linear or branched structure. The organic residue bonded to the silicon atom has preferably 1 to 30 carbon atoms, more preferably 1 to 20 carbon atoms. Examples of the organic residue include alkyl groups such as methyl group, ethyl group, propyl group, butyl group, hexyl group and decyl group, cycloalkyl groups such as cyclohexyl group, aryl groups such as phenyl group, and aralkyl groups such as tolyl group. The organic residue is more preferably an alkyl group having 1 to 8 carbon atoms, alkenyl group or aryl group. The alkyl group is particularly preferably an alkyl group having 1 to 4 carbon atoms such as methyl group, ethyl group or propyl group. Further, the silicone compound used as the silicone-based flame retardant preferably contains an aryl group. A silane compound and a siloxane compound as organic surface treating agents for a titanium dioxide pigment are clearly distinguished from the silicone-based flame retardant as a preferred effect is obtained when they do not contain an aryl group. The silicone compound used as the silicone-based flame retardant may contain a reactive group in addition to the above Si-H group and alkoxy group. Examples of the reactive group include amino group, carboxyl group, epoxy group, vinyl group, mercapto group and methacryloxy group.
The content of the silicone-based flame retardant is preferably 0.01 to 20 parts by weight, more preferably 0.5 to 10 parts by weight and much more preferably 1 to 5 parts by weight based on 100 parts by weight of the resin composition.

(iv) Polytetrafluoroethylene having fibril formability (fibrillated PTFE)

Fibrillated PTFE may be fibrillated PTFE alone or a polytetrafluoroethylene-based mixture of fibrillated PTFE, that is, fibrillated PTFE particles and an organic polymer. The fibrillated PTFE has an extremely high molecular weight and tends to become fibrous through the bonding of PTFE's by an external function such as shear force. The number average molecular weight thereof is 1, 500, 000 to several tens of million. The lower limit of the number average molecular weight is preferably 3,000,000. The number average molecular weight is calculated based on the melt viscosity of polytetrafluoroethylene at 380°C as disclosed by JP-A 6-145520. That is, the fibrillated PTFE as the component B has a melt viscosity at 380°C measured by the method disclosed by the above publication of $10^7$ to $10^{13}$ poise, preferably $10^8$ to $10^{12}$ poise.
The PTFE in a solid form or an aqueous dispersion form may be used. A PTFE mixture of the fibrillated PTFE and another resin may also be used to improve dispersibility in a resin and further obtain high flame retardancy and mechanical properties. As disclosed by JP-A 6-145520, a polymer having the fibrillated PTFE as the core and low-molecular weight polytetrafluoroethylene as the shell is preferably used as well. Commercially available products of the fibrillated PTFE include the TEFLON (registered trademark) 6J of Du Pont-Mitsui Fluorochemicals Co., Ltd. and the POLYFLON MPA FA500 and F-201L of Daikin Industries, Ltd. The fibrillated PTFE mixture may be obtained by (1) a method in which a fibrillated PTFE aqueous dispersion and an aqueous dispersion or solution of an organic polymer are mixed together and co-precipitation is carried out to obtain a coaggregated mixture (disclosed by JP-A 60-258263 and JP-A 63-154744), (2) a method in which a fibrillated PTFE aqueous dispersion and dried organic polymer particles are mixed together (disclosed by JP-A 4-272957), (3) a method in which a fibrillated PTFE aqueous dispersion and an organic polymer particle solution are mixed together uniformly and their media are removed from the obtained mixture at the same time (disclosed by JP-A 06-220210 and JP-A 08-188653), (4) a method in which a monomer for forming an organic polymer is polymerized in a fibrillated PTFE aqueous dispersion (disclosed by JP-A 9-95583), or (5) a method in which a PTFE aqueous dispersion and an organic polymer dispersion are mixed together uniformly and a vinyl-based

monomer is polymerized in the mixed dispersion to obtain a mixture (disclosed by JP-A 11-29679).

Commercially available products of these fibrillated PTFE mixtures include the METABLEN A series such as METABLEN A3000 (trade name), METABLEN A3700 (trade name) and METABLEN A3800 (trade name) of Mitsubishi Rayon Co., Ltd., the SN3300B7 (trade name) of Shine Polymer Technology Co., Ltd., and the BLENDEX B449 (trade name) of GE Specialty Chemicals.

The content of the fibrillated PTFE in the mixture is preferably 1 to 95 wt%, more preferably 10 to 90 wt% and most preferably 20 to 80 wt% based on 100 wt% of the mixture.

When the content of the fibrillated PTFE in the mixture falls within the above range, the high dispersibility of the fibrillated PTFE can be obtained. The content of the fibrillated PTFE is preferably 0.001 to 0.2 part by weight, more preferably 0.01 to 0.2 part by weight and much more preferably 0.01 to 0.18 part by weight based on 100 parts by weight of the resin composition. "Parts by weight" shown above is the weight of the whole mixture in the case of the polytetrafluoroethylene mixture.

(II) Phosphorus-based stabilizer

The resin composition of the present invention is preferably mixed with a phosphorus-based stabilizer as long as its hydrolyzability is not promoted. The phosphorus-based stabilizer improves heat stability at the time of production or molding as well as mechanical properties, hue and molding stability. The phosphorus-based stabilizer is selected from phosphorous acid, phosphoric acid, phosphonous acid, phosphonic acid and esters thereof, and a tertiary phosphine.

Examples of the phosphite compound include triphenyl phosphite, tris (nonylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, 2,2-methylenebis(4,6-di-tert-butylphenyl)octyl phosphite, tris(diethylphenyl)phosphite, tris(di-iso-propylphenyl)phosphite, tris(di-n-butylphenyl)phosphite, tris(2,4-di-tert-butylphenyl)phosphite, tris(2,6-di-tert-butylphenyl)phosphite, distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, phenyl bisphenol A pentaerythritol diphosphite, bis(nonylphenyl)pentaerythritol diphosphite and dicyclohexyl pentaerythritol diphosphite.

Other phosphite compounds which react with a dihydric phenol and have a cyclic structure may also be used. The phosphite compounds include
2,2'-methylenebis(4,6-di-tert-butylphenyl) (2,4-di-tert-butylphenyl)phosphite,
2,2'-methylenebis(4,6-di-tert-butylphenyl) (2-tert-butyl-4-methylphenyl)phosphite,
2,2'-methylenebis(4-methyl-6-tert-butylphenyl) (2-tert-butyl-4-methylphenyl)phosphite and
2,2'-ethylidenebis(4-methyl-6-tert-butylphenyl) (2-tert-butyl-4-methylphenyl)phosphite.

Examples of the phosphate compound include tributyl phosphate, trimethyl phosphate, tricresyl phosphate, triphenyl phosphate, trichlorophenyl phosphate, triethyl phosphate, diphenylcresyl phosphate, diphenylmonoorthoxenylphosphate, tributoxyethyl phosphate, dibutyl phosphate, dioctyl phosphate and diisopropyl phosphate. Out of these, triphenyl phosphate and trimethyl phosphate are preferred.

Examples of the phosphonite compound include tetrakis(2,4-di-tert-butylphenyl)-4,4'-biphenylene diphosphonite,
tetrakis(2,4-di-tert-butylphenyl)-4,3'-biphenylene diphosphonite,
tetrakis(2,4-di-tert-butylphenyl)-3,3'-biphenylene diphosphonite,
tetrakis(2,6-di-tert-butylphenyl)-4,4'-biphenylene diphosphonite,
tetrakis(2,6-di-tert-butylphenyl)-4,3'-biphenylene diphosphonite,
tetrakis(2,6-di-tert-butylphenyl)-3,3'-biphenylene diphosphonite,
bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite and bis(2,6-di-tert-butylphenyl)-3-phenyl-phenyl phosphonite.

Out of these,
tetrakis(di-tert-butylphenyl)-biphenylene diphosphonites and bis(di-tert-butylphenyl)-phenyl-phenyl phosphonites are preferred, and
tetrakis(2,4-di-tert-butylphenyl)-biphenylene diphosphonites and
bis(2,4-di-tert-butylphenyl)-phenyl-phenyl phosphonites are more preferred.

The phosphonite compound may be and is preferably used in combination with the above phosphite compound having an aryl group substituted by two or more alkyl groups. Examples of the phosphonate compound include dimethylbenzene phosphonate, diethylbenzene phosphonate and dipropylbenzene phosphonate.

Examples of the tertiary phosphine include triethyl phosphine, tripropyl phosphine, tributyl phosphine, trioctyl phosphine, triamyl phosphine, dimethylphenyl phosphine, dibutylphenyl phosphine, diphenylmethyl phosphine, diphenyloctyl phosphine, triphenyl phosphine, tri-p-tolyl phosphine, trinaphthyl phosphine and diphenylbenzyl phosphine.

Triphenyl phosphine is particularly preferred as the tertiary phosphine. The above phosphorus-based stabilizers may be used alone or in combination of two or more. Out of these phosphorus-based stabilizers, alkyl phosphate compounds typified by trimethyl phosphate are preferably used. A combination of an alkylphosphate compound and a phosphite compound and/or a phosphonite compound is also preferred.

The content of the phosphorus-based stabilizer is preferably 0.0001 to 1 part by weight, more preferably 0.001 to 0.5 part by weight and much more preferably 0.005 to 0.3 part by weight based on 100 parts by weight of the resin composition.

(III) Hindered phenol-based stabilizer

The resin composition of the present invention may be further mixed with a hindered phenol-based stabilizer. When the hindered phenol-based stabilizer is used, it provides the effect of suppressing the deterioration of hue at the time of molding or during long-time use.

Examples of the hindered phenol-based stabilizer include α-tocopherol, butylhydroxytoluene, sinapyl alcohol, vitamin E,
n-octadecyl-β-(4'-hydroxy-3',5'-di-tert-butylphenyl) propionate, 2-tert-butyl-6-(3'-tert-butyl-5'-methyl-2'-hydroxybenzyl)-4-methylphenyl acrylate,
2,6-di-tert-butyl-4-(N,N-dimethylaminomethyl)phenol, 3,5-di-tert-butyl-4-hydroxybenzylphosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-α-methyl-benzyl-p-cresol), 2,2'-ethylidene-bis(4,6-di-tert-butylphenol), 2,2'-butylidene-bis(4-methyl-6-tert-butylphenol), 4,4'-butylidene-bis(3-methyl-6-tert-butylphenol), triethylene glycol-N-bis-3-(3-tert-butyl-4-hydroxy-5-methylphenyl)propionate,
1,6-hexanediol-bis[3-(3,5-di-tert-butyl-4-hydroxyphenyl) propionate],
bis[2-tert-butyl-4-methyl-6-(3-tert-butyl-5-methyl-2-hydroxybenzyl)phenyl]terephthalate,
3,9-bis{2-[3-(3-tert-butyl-4-hydroxy-5-methylphenyl) propionyloxy]-1,1-dimethylethyl}-2,4,8,10-tetraoxaspiro[5,5]undecane,
4,4'-thiobis(6-tert-butyl-m-cresol),
4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,2-thiodiethylenebis-[3-(3,5-di-tert-butyl-4-hydroxyphenyl)propionate],
2,4-bis(n-octylthio)-6-(4-hydroxy-3',5'-di-tert-butylanilino)-1,3,5-triazine,
N,N'-hexamethylenebis-(3,5-di-tert-butyl-4-hydroxyhydrocinnamide),
N,N'-bis[3-(3,5-di-tert-butyl-4-hydroxyphenyl)propionyl] hydrazine,
1,1,3-tris(2-methyl-4-hydroxy-5-tert-butylphenyl)butane, 1,3,5-trimethyl-2,4,6-tris(3,5-di-tert-butyl-4-hydroxybenzyl)benzene,
tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl)isocyanurate,
1,3,5-tris-2[3(3,5-di-tert-butyl-4-hydroxyphenyl) propionyloxy]ethyl isocyanurate and
tetrakis[methylene-3-(3',5'-di-tert-butyl-4-hydroxyphenyl)propionate]methane. All of them are easily acquired. The above hindered phenol-based stabilizers may be used alone or in combination of two or more.

The content of the hindered phenol-based stabilizer is preferably 0.0001 to 1 part by weight, more preferably 0.001 to 0.5 part by weight and much more preferably 0.005 to 0.3 part by weight based on 100 parts by weight of the resin composition.

(IV) Heat stabilizer except for the above stabilizers

The resin composition of the present invention may be mixed with another heat stabilizer except for the above phosphorus-based stabilizer and the hindered phenol-based stabilizer. A preferred example of the heat stabilizer is a lactone-based stabilizer typified by a reaction product of 3-hydroxy-5,7-di-tert-butyl-furan-2-one and o-xylene.

This stabilizer is detailed in JP-A 7-233160. This compound is marketed under the name of Irganox HP-136 (trademark, manufactured by Ciba Specialty Chemicals) and may be used. A stabilizer prepared by mixing together the above compound, a phosphite compound and a hindered phenol compound is commercially available. A preferred example of the stabilizer is the Irganox HP-2921 of Ciba Specialty Chemicals. The content of the lactone-based stabilizer is preferably 0.0005 to 0.05 part by weight and more preferably 0.001 to 0.03 part by weight based on 100 parts by weight of the resin composition.

Other stabilizers include sulfur-containing stabilizers such as pentaerythritol tetrakis(3-mercaptopropionate), pentaerythritol tetrakis(3-laurylthiopropionate) and glycerol-3-stearyl thiopropionate. The content of the sulfur-containing stabilizer is preferably 0.001 to 0.1 part by weight and more preferably 0.01 to 0.08 part by weight based on 100 parts

by weight of the resin composition.

The resin composition of the present invention may be mixed with an epoxy compound as required. The epoxy compound is used to suppress the corrosion of a metal mold, and all epoxy compounds having an epoxy functional group may be basically used. Preferred examples of the epoxy compound include 3,4-epoxycyclohexylmethyl-3',4'-epoxycyclohexyl carboxylate, 1,2-epoxy-4- (2-oxiranyl) cyclohexane adduct of 2,2-bis(hydroxymethyl)-1-butanol, copolymer of methyl methacrylate and glycidyl methacrylate, and copolymer of styrene and glycidyl methacrylate. The content of the epoxy compound is preferably 0.003 to 0.2 part by weight, more preferably 0.004 to 0.15 part by weight and much more preferably 0.005 to 0.1 part by weight based on 100 parts by weight of the resin composition.

(V) Ultraviolet absorbent

An ultraviolet absorbent may be mixed with the resin composition of the present invention to provide light resistance. Examples of a benzophenone-based ultraviolet absorbent include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodium sulfoxybenzophenone, bis(5-benzoyl-4-hydroxy-2-methoxyphenyl)methane, 2-hydroxy-4-n-dodecyloxybenzophenone and 2-hydroxy-4-methoxy-2'-carboxybenzophenone.

Examples of a benzotriazole-based ultraviolet absorbent include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one) and 2-[2-hydroxy-3-(3,4,5,6-tetrahydrophthalimidomethyl)-5-methylphenyl]benzotriazole. Polymers having a 2-hydroxyphenyl-2H-benzotriazole skeleton such as a copolymer of 2-(2'-hydroxy-5-methacryloxyethylphenyl)-2H-benzotriazole and a vinyl-based monomer copolymerizable with that monomer and a copolymer of 2-(2'-hydroxy-5-acryloxyethylpheny)-2H-benzotriazole and a vinyl-based monomer copolymerizable with that monomer are also included.

Examples of a hydroxyphenyltriazine-based ultraviolet absorbent include 2-(4,6-diphenyl-1,3,5-triazin-2-yl)-5-hexyloxyphenol, 2-(4,6-diphenyl-1,3,5-triazin-2-yl)-5-methyloxyphenol, 2-(4,6-diphenyl-1,3,5-triazin-2-yl)-5-ethyloxyphenol, 2-(4,6-diphenyl-1,3,5-triazin-2-yl)-5-propyloxyphenol and 2-(4,6-diphenyl-1,3,5-triazin-2-yl)-5-butyloxyphenol. Further, compounds having a 2,4-dimethylphenyl group in place of the phenyl groups of the above compounds, such as 2-(4,6-bis(2,4-dimethylphenyl)-1,3,5-triazin-2-yl)-5-hexyloxyphenol, are also included.

Examples of a cyclic iminoester-based ultraviolet absorbent include 2,2'-p-phenylenebis(3,1-benzoxazin-4-one), 2,2'-m-phenylenebis(3,1-benzoxazin-4-one) and 2,2'-p,p'-diphenylenebis(3,1-benzoxazin-4-one) .

Examples of a cyanoacrylate-based ultraviolet absorbent include 1,3-bis[(2'-cyano-3',3'-diphenylacryloyl)oxy]-2,2-bis[(2 -cyano-3,3-diphenylacryloyl)oxy]methyl)propane and 1,3-bis-[(2-cyano-3,3-diphenylacryloyl)oxy]benzene.

The above ultraviolet absorbent may be a polymer type ultraviolet absorbent obtained by copolymerizing an ultraviolet absorbing monomer and/or an optically stable monomer which has the structure of a monomer compound able to be radically polymerized with a monomer such as an alkyl (meth)acrylate. Preferred examples of the above ultraviolet absorbing monomer include compounds having a benzotriazole skeleton, a benzophenone skeleton, a triazine skeleton, a cyclic iminoester skeleton or a cyanoacrylate skeleton in the ester substituent of a (meth)acrylic acid ester. Out of these, benzotriazole-based and hydroxyphenyltriazine-based compounds are preferred from the viewpoint of ultraviolet absorbing ability, and cyclic imionoester-based and cyanoacrylate-based compounds are preferred from the viewpoints of heat resistance and hue. The KEMISORB 79 of Chemipro Kasei Kaisha, Ltd. is such an example. The above ultraviolet absorbents may be used alone or in combination of two or more.

The content of the ultraviolet absorbent is preferably 0.01 to 2 parts by weight, more preferably 0.02 to 2 parts by weight, much more preferably 0.03 to 1 part by weight and particularly preferably 0.05 to 0.5 part by weight based on 100 parts by weight of the resin composition.

(VI) Fluorescent brightener

In the resin composition of the present invention, any fluorescent brightener is used if it is used to change the

color of a resin to white or blue-white color. Examples thereof include stilbene-based, benzimidazole-based, benzoxazole-based, naphthalimide-based, rhodamine-based, coumalin-based and oxazine-based compounds. CI Fluorescent Brightener 219:1, the EASTOBRITE OB-1 of Eastman Chemical Company and the Hakkol PSR of Hakkol Chemical Co., Ltd. are such examples. The fluorescent brightener serves to absorb the energy of an ultraviolet part of light and apply this energy to a visible part. The content of the fluorescent brightener is preferably 0.001 to 0.1 part by weight and more preferably 0.001 to 0.05 part by weight based on 100 parts by weight of the resin composition. Even when the content is higher than 0.1 part by weight, the effect of improving the color of the composition is small.

(VII) Others

Additives known per se may be mixed with the resin composition of the present invention in small proportions in addition to the above additives in order to provide various functions to a molded product of the resin composition and improve the characteristics properties of the molded product. These additives are used in normal amounts as long as the object of the present invention is not impaired. The additives include a reinforcing filler, a sliding agent (such as PTFE particles), a colorant (a pigment or dye such as carbon black or titanium oxide), a fluorescent dye, an inorganic phosphor (such as a phosphor containing an aluminate as a mother crystal), an antistatic agent, a crystal nucleating agent, inorganic and organic antibacterial agents, an optical catalyst-based antifouling agent (such as particulate titanium oxide or particulate zinc oxide), a release agent, a flowability modifier, a radical generator, an infrared absorbent (heat-ray absorbent) and a photochromic agent.

<resin composition>

A 2.0 mm-thick smooth flat plate having an arithmetic average roughness (Ra) of not more than 0.03 μm obtained from the resin composition of the present invention has a haze of preferably 95 to 99.9 %, more preferably 96 to 99.9 % and more preferably 97 to 99.9 %.

The resin composition of the present invention can be pelletized by melt kneading by means of an extruder such as single-screw extruder or double-screw extruder. To produce such a pellet, the above flame retardant, reinforcing filler and additives may be mixed with the resin composition. Various products can be manufactured by injection molding the pellet which has been produced from the resin composition of the present invention as described above. The resin which has been melt kneaded by means of an extruder may be directly formed into a sheet, film, profile extrusion molded article, direct blow molded article or injection molded article without being pelletized. Molded articles can be obtained not only by ordinary molding techniques but also by injection molding techniques such as injection compression molding, injection press molding, gas assist injection molding, foam molding (including what comprises the injection of a super-critical fluid), insert molding, in-mold coating molding, insulated runner molding, quick heating and cooling molding, two-color molding, sandwich molding and super high-speed injection molding according to purpose. The advantages of these molding techniques have already been widely known. Both cold-runner molding and hot-runner molding techniques may be employed. The resin composition of the present invention may be formed into a profile extrusion molded article, sheet or film by extrusion molding. Inflation, calendering and casting techniques may also be used to mold a sheet or film. Further, a specific stretching operation may be used to mold a heat shrinkable tube. The resin composition of the present invention can be formed into a molded article by rotational molding or blow molding.

Any process is employed to manufacture the resin composition of the present invention. For example, after the component A, the component B, the component C and optionally other components are fully mixed together by using pre-mixing means such as a twin-cylinder mixer, Henschel mixer, mechanochemical device or extrusion mixer, the resulting mixture is granulated by means of an extrusion granulator or briquetting machine as required, melt kneaded by means of a melt kneader typified by a vented double-screw extruder and then pelletized by means of a device such as a pelletizer.

<molded article>

A molded article can be obtained by injection molding a pellet of the resin composition of the present invention.

A molded article can also be manufactured by not only an ordinary cold runner injection molding technique but also a hot runner injection molding technique which enables the elimination of a runner. For injection molding, not only ordinary molding techniques but also molding techniques such as gas assist injection molding, injection compression molding, super high-speed injection molding, injection press molding, two-color molding, sandwich molding, in-mold coating molding, insert molding, foam molding (including what makes use of a super-critical fluid), quick heating and cooling molding, insulated runner molding, in-mold re-melting molding and a combination thereof may be employed. Further, a molded article formed from the resin composition may be subjected to various surface treatments. The surface treatments include decorative coating, hard coating, water-repellent and oil-repellent coating, hydrophilic coating, ultraviolet light absorption coating, infrared light absorption coating, electromagnetic wave absorption coating, exothermic coating, antistatic coating, static control coating, conductive coating and metallizing (such as plating, chemical vapor deposition (CVD), physical deposition (PVD) or thermal spray) . A laminate comprising a transparent sheet and a transparent conductive layer is particularly preferred.

The mode of the invention that the inventors of the present invention think is the best is a combination of the preferred ranges of the above requirements. For example, typical examples thereof are described in the following examples. It is to be understood that the present invention is not limited thereto.

## EXAMPLES

The following examples are provided for the purpose of further illustrating the present invention but are in no way to be taken as limiting.

The following items were evaluated.

### 1. Evaluation of polycarbonate-polydiorganosiloxane copolymer (component B)

#### (1) Viscosity average molecular weight (Mv)

The specific viscosity ($\eta_{sp}$) calculated from the following equation was obtained from a solution prepared by dissolving the polycarbonate-polydiorganosiloxane copolymer in 100 ml of methylene chloride at 20°C by using an Ostwald viscometer, and then the viscosity average molecular weight Mv was calculated from the obtained specific viscosity ($\eta_{sp}$) based on the following equation.

$$\text{Specific viscosity } (\eta_{sp}) = (t - t_0)/t_0$$

[$t_0$ is the number of seconds during which methylene chloride drops and t is the number of seconds during which a sample solution drops.]

$$\eta_{sp}/c = [\eta] + 0.45 \times [\eta]^2 c \quad ([\eta] \text{ represents an intrinsic viscosity})$$

$[\eta] = 1.23 \times 10^{-4} M^{0.83}$
c = 0.7

#### (2) Content of polydiorganosiloxane component

The $^1$H-NMR spectrum of the polycarbonate-polydiorganosiloxane copolymer was measured by using the JNM-AL400 of JEOL Ltd. to compare the integral ratio of a peak derived from the dihydric phenol (I) with the integral ratio of a peak derived from the dihydroxyaryl-terminated polydiorganosiloxane (II).

$$\text{Content of polydiorganosiloxane component (wt\%)} = [A/(A+B)] \times 100$$

A: [integral ratio of peak of one $^1$H of dihydroxyaryl-terminated polydiorganosiloxane (II)] x [molecular weight of polydiorganosiloxane moiety]
B: [integral ratio of peak of one $^1$H of dihydric phenol (I)] x [molecular weight of dihydric phenol]

#### (3) Average size of polydiorganosiloxane domains

The polycarbonate-polydiorganosiloxane copolymer powder was kneaded by means of a vented double-screw extruder (KZW15-25MG of Technovel Corporation) at 260°C to be pelleted. The obtained pellet was dried at 120°C for 5 hours in a hot air drier and molded at a molding temperature of 280°C and a mold temperature of 80°C by means of an injection molding machine [SG150U·S-M IV of Sumitomo Heavy Industries, Ltd.] to obtain a triple plate having a width

of 50 mm, a length of 90 mm and a thickness from the gate side of 3.0 mm (length of 20 mm), 2.0 mm (length of 45 mm) and 1.0 mm (length of 25 mm).

This triple plate was used to measure the average size of polydiorganosiloxane domains at an intersection point 5 mm from the end portion and 5 mm from the side portion of a 1.0 mm thick portion by means of an X-ray diffraction apparatus (RINT-TTRII of Rigaku Corporation). An X-ray source producing a CuKα characteristic X-ray (wavelength of 0.1541841 nm) and having a tube voltage of 50 kV and a tube current of 300 mA was used. The small angle scattering optical system has a first slit of 0.03 mm with HS of 10 mm, SS of 0.2 mm and RS of 0.1 mm. Measurement was made under the conditions of FT 0.01° step, 4 sec/step and a scanning range of 0.06-3° by an asymmetric scanning method (2θ scan). The NANO-Solver (Ver. 3.3) small angle scattering analytical software of Rigaku Corporation was used for the analysis of curve fitting.

Analysis was made on an isolated particle model having a polycarbonate matrix density of 1.2 g/cm$^3$ and a polydiorganosiloxane domain density of 1.1 g/cm$^3$ in which interaction between particles (interference between particles) was not taken into consideration based on the assumption that it had an aggregation structure that polydiorganosiloxane spherical domains are dispersed in the polycarbonate matrix and there were variations in particle size distribution.

2. Evaluation of resin composition

(1) total light transmittance, haze

A pellet obtained from the composition of each Example was dried at 120°C for 5 hours in a hot air circulation drier and molded at a molding temperature of 280°C and a mold temperature of 80°C by means of an injection molding machine [SG150U·S-M IV of Sumitomo Heavy Industries, Ltd.] to obtain a triple plate having a width of 50 mm, a length of 90 mm and a thickness from the gate side of 3.0 mm (length of 20 mm), 2.0 mm (length of 45 mm) and 1.0 mm (length of 25 mm) . The total light transmittance and haze of a 2.0 mm-thick portion of this triple plate were measured in accordance with JIS-K 7136.

(2) Light diffusivity

The light diffusivity of a 2 mm-thick portion of the above triple plate was measured by using the dispersivity meter of Nippon Denshoku Industries Co., Ltd. The metering method is shown in Fig. 1. Light diffusivity refers to the angle of γ when the amount of transmitted light is 50 based on 100 of the amount of transmitted light at γ of 0° at the time of applying light perpendicularly to one side of a test specimen from above in Fig. 1.

(3) Hue

The hue (b value) of a 2 mm-thick portion of the above triple plate was measured by using the spectral color meter (SE-2000) (light source: C/2) of Nippon Denshoku Industries Co., Ltd. The b value is induced based on the Hunter's color difference formula from the three stimulus values X, Y and Z specified in JIS Z8722. As the numerical value becomes smaller, the hue becomes more achromic.

(4) Content of polydiorganosiloxane component

The $^1$H-NMR spectrum of the above triple plate was measured by using the JNM-AL400 of JEOL Ltd. to compare the integral ratio of a peak derived from the dihydric phenol (I) with the integral ratio of a peak derived from the dihydroxyaryl-terminated polydiorganosiloxane (II).

$$\text{Content of polydiorganosiloxane component (wt\%)} = [A/(A+B)] \times 100$$

A: [integral ratio of peak of one $^1$H of dihydroxyaryl-terminated polydiorganosiloxane (II)] x [molecular weight of polydiorganosiloxane moiety]
B: [integral ratio of peak of one $^1$H of dihydric phenol (I)] x [molecular weight of dihydric phenol]

Examples 1 to 16 and Comparative Examples 1 to 5 (examples 10 and 11 are reference examples)

Amounts shown in Tables 1 and 2 of the components A to C and additives were mixed together by means of a blender and melt kneaded together by means of a vented double-screw extruder to obtain a pellet. After a premixture

of the polycarbonate and the additives whose amounts were 10 to 100 times larger than the above amounts was prepared, the mixing of all of these components was carried out by means of the blender. The TEX30α vented double-screw extruder of The Nippon Steel Works, Ltd. (completely interlocking type, unidirectional rotation, two screws) was used. The extrusion conditions include a delivery rate of 20 kg/h, a screw revolution of 150 rpm, a vent vacuum degree of 3 kPa, an extrusion temperature from the first feed port to the second feed port of 270°C and an extrusion temperature from the second feed port to the dice of 290°C.

The results are shown in Tables 1 and 2. In Examples 1 to 13 and 15, since the average size of the domains in the polycarbonate matrix of the component B falls within a range of 1 to 18 nm, the total light transmittance of the resin composition is satisfactory. When the average size of the domains in Examples 5 and 13 is small, the hue tends to deteriorate though the total light transmittance is satisfactory. When the amount of the light diffusing agent (component C) is large as in Example 7, light diffusivity increases though total light transmittance lowers.

Table 1

| | | | | Ex.1 | Ex.2 | Ex.3 | Ex.4 | Ex.5 | Ex.6 | Ex.7 | Ex.8 |
|---|---|---|---|---|---|---|---|---|---|---|---|
| Composition | Component A | A-1 | pbw | 99 | 98 | 99 | 99.8 | 95 | 99 | 99 | |
| | | A-2 | pbw | | | | | | | | 99 |
| | | A-3 | pbw | | | | | | | | |
| | | A-4 | pbw | | | | | | | | |
| | Component B | B-1 | pbw | 1 | | | | | 1 | 1 | 1 |
| | | B-2 | pbw | | 2 | 1 | 0.2 | | | | |
| | | B-3 | pbw | | | | | | | | |
| | | B-4 | pbw | | | | | 5 | | | |
| | | B-5 | pbw | | | | | | | | |
| | | B-6 | pbw | | | | | | | | |
| | | B-7 | pbw | | | | | | | | |
| | | B-8 | pbw | | | | | | | | |
| | Component C | C-1 | pbw | 0.4 | 0.4 | 0.4 | 0.4 | 0.4 | 2 | 4 | 0.4 |
| | | C-2 | pbw | | | | | | | | |
| | | C-3 | pbw | | | | | | | | |
| | Other components | D-1 | pbw | | | | | | | | |
| | | D-2 | pbw | | | | | | | | |
| | | E-1 | pbw | | | | | | | | |
| | | E-2 | pbw | | | | | | | | |
| | | F-1 | pbw | 0.03 | 0.03 | 0.03 | 0.03 | 0.03 | 0.03 | 0.03 | 0.03 |
| | | F-2 | pbw | 0.03 | 0.03 | 0.03 | 0.03 | 0.03 | 0.03 | 0.03 | 0.03 |
| | | G-1 | pbw | 0.15 | 0.15 | 0.15 | 0.15 | 0.15 | 0.15 | 0.15 | 0.15 |
| | | H-1 | pbw | 0.002 | 0.002 | 0.002 | 0.002 | 0.002 | 0.002 | 0.002 | 0.002 |

Ex.: Example, pbw: Parts by weight

Table 1 (continued)

| | | | | Ex.9 | Ex.10 | Ex.11 | Ex.12 | Ex.13 | Ex.14 | Ex.15 | Ex.16 |
|---|---|---|---|---|---|---|---|---|---|---|---|
| Composition | Component A | A-1 | pbw | | | | 99 | 99 | 99 | 99 | 99 |
| | | A-2 | pbw | | | | | | | | |
| | | A-3 | pbw | 50 | 50 | 50 | | | | | |
| | | A-4 | pbw | 49 | 49 | 50 | | | | | |
| | Component B | B-1 | pbw | 1 | 1 | | 1 | | | 1 | |
| | | B-2 | pbw | | | 0.5 | | | | | |
| | | B-3 | pbw | | | | | | | | 1 |
| | | B-4 | pbw | | | | | | | | |
| | | B-5 | pbw | | | | | | 1 | | |
| | | B-6 | pbw | | | | | 1 | | | |
| | | B-7 | pbw | | | | | | | | |
| | | B-8 | pbw | | | | | | | | |
| | Component C | C-1 | pbw | 0.4 | | | 0.2 | 0.4 | 0.4 | 8 | 0.4 |
| | | C-2 | pbw | | 0.6 | | | | | | |
| | | C-3 | pbw | | | 0.5 | | | | | |
| | Other components | D-1 | pbw | | | | 2 | | | | |
| | | D-2 | pbw | 0.2 | 0.05 | 0.1 | | | | | |
| | | E-1 | pbw | | | | 0.6 | 0.6 | 0.6 | | |
| | | E-2 | pbw | 0.01 | | | | | | | |
| | | F-1 | pbw | 0.03 | 0.03 | 0.03 | 0.03 | 0.03 | 0.03 | 0.03 | 0.03 |
| | | F-2 | pbw | 0.03 | 0.03 | 0.03 | 0.03 | 0.03 | 0.03 | 0.03 | 0.03 |
| | | G-1 | pbw | 0.15 | 0.15 | 0.15 | 0.15 | 0.15 | 0.15 | 0.15 | 0.15 |
| | | H-1 | pbw | 0.002 | 0.002 | 0.002 | 0.002 | 0.002 | 0.002 | 0.002 | 0.002 |

Table 1 (continued)

| | | | Ex.1 | Ex.2 | Ex.3 | Ex.4 | Ex.5 | Ex.6 | Ex.7 | Ex.8 |
|---|---|---|---|---|---|---|---|---|---|---|
| Evaluation of characteristic properties | Siloxane domain size of component B | nm | 10 | 13 | 13 | 13 | 2 | 10 | 10 | 10 |
| | Total light transmittance | % | 61 | 55 | 59 | 61 | 61 | 48 | 40 | 61 |
| | Haze | % | 99 | 99 | 99 | 99 | 99 | 99 | 99 | 99 |
| | Light diffusivity | ° | 46 | 48 | 47 | 46 | 39 | 60 | 60 | 46 |
| | Hue | | -5.1 | -6.8 | -6.9 | -4.8 | -4.7 | -5.4 | -5.3 | -5.0 |
| | Content of polydiorgano siloxane component | % | 0.04 | 0.16 | 0.08 | 0.016 | 0.002 | 0.04 | 0.04 | 0.04 |

Table 1 (continued)

| | | | Ex.9 | Ex.10 | Ex.11 | Ex.12 | Ex.13 | Ex.14 | Ex.15 | Ex.16 |
|---|---|---|---|---|---|---|---|---|---|---|
| Evaluation of characteristic properties | Siloxane domain size of component B | nm | 10 | 10 | 13 | 10 | 1 | 38 | 10 | 25 |
| | Total light transmittance | % | 58 | 80 | 73 | 56 | 64 | 49 | 37 | 51 |
| | Haze | % | 99 | 98 | 99 | 99 | 99 | 99 | 99 | 99 |
| | Light diffusivity | ° | 46 | 17 | 30 | 47 | 32 | 59 | 60 | 48 |
| | Hue | | -5.0 | -5.4 | -5.5 | -5.1 | -4.5 | -5.5 | -5.1 | -5.6 |
| | Content of polydiorgano siloxane component | % | 0.04 | 0.04 | 0.04 | 0.04 | 0.04 | 0.04 | 0.04 | 0.04 |

Table 2

| | | | | C.Ex.1 | C.Ex.2 | C.Ex.3 | C.Ex.4 | C.Ex.5 |
|---|---|---|---|---|---|---|---|---|
| Composition | Component A | A-1 | pbw | 100 | 99 | 99 | 99 | 99 |
| | | A-2 | pbw | | | | | |
| | | A-3 | pbw | | | | | |
| | | A-4 | pbw | | | | | |
| | Component B | B--1 | pbw | | 1 | 1 | | |
| | | B-2 | pbw | | | | | |
| | | B-3 | pbw | | | | | |
| | | B-4 | pbw | | | | | |
| | | B-5 | pbw | | | | | |
| | | B-6 | pbw | | | | | |
| | | B-7 | pbw | | | | | 1 |
| | | B-8 | pbw | | | | 1 | |
| | Component C | C-1 | pbw | 0.4 | 0.03 | 12 | 0.4 | 0.4 |
| | | C-2 | pbw | | | | | |
| | | C-3 | pbw | | | | | |
| | Other components | D-1 | pbw | | | | | |
| | | D-2 | pbw | | | | | |
| | | E-1 | pbw | | | | | |
| | | E-2 | pbw | | | | | |
| | | F-1 | pbw | 0.03 | 0.03. | 0.03 | 0.03 | 0.03 |
| | | F-2 | pbw | 0.03 | 0.03 | 0.03 | 0.03 | 0.03 |
| | | G-1 | pbw | 0.15 | 0.15 | 0.15 | 0.15 | 0.15 |
| | | H-1 | pbw | 0.002 | 0.002 | 0.002 | 0.002 | 0.002 |
| | | | | C.Ex.1 | C.Ex.2 | C.Ex.3 | C.Ex.4 | C.Ex.5 |
| Evaluation of characteristic properties | | Siloxane domain size of component B | nm | - | 10 | 10 | 48 | 0.3 |
| | | Total light transmittance | % | 61 | 78 | 20 | 34 | 61 |
| | | Haze | % | 99 | 93 | 99 | 99 | 99 |
| | | Light diffusivity | ° | 46 | 15 | 60 | 55 | 46 |
| | | Hue | | -3.8 | -4.7 | -5.0 | -4.2 | -3.9 |
| | | Content of polydiorgano siloxane component | % | 0 | 0.04 | 0.04 | 0.04 | 0.04 |
| C.Ex.: Comparative Example, pbw: parts by weight | | | | | | | | |

The components in use are detailed hereinbelow.

(component A)

A-1: polycarbonate powder having a viscosity average molecular weight of 19,700 obtained by the following method

2,340 parts of ion exchange water, 947 parts of a 25 % sodium hydroxide aqueous solution and 0.7 part of hydrosulfite were fed to a reactor equipped with a thermometer, a stirrer and a reflux condenser, 710 parts of 2,2-bis(4-hydroxyphenyl)propane (may be referred to as "bisphenol A" hereinafter) was dissolved under agitation (bisphenol A solution), 2,299 parts of methylene chloride and 112 parts of a 48.5 % sodium hydroxide aqueous solution were added to the resulting solution, and 354 parts of phosgene was blown into the reactor at 15 to 25°C for about 90 minutes to carry out a phosgene reaction.

After the end of the phosgene reaction, 148 parts of a 11 % methylene chloride solution of p-tert-butylphenol and 88 parts of a 48.5 % sodium hydroxide aqueous solution were added, stirring was suspended, the resulting solution was left to stand for 10 minutes and separated, stirring was resumed to emulsify the solution, and five minutes after that, the obtained emulsion was treated 35 times of bath at a revolution of 1,200 rpm by means of a homomixer (manufactured by PRIMIX Corporation) to obtain highly emulsified dope. This highly emulsified dope was reacted in a polymerization tank (having a stirrer) at a temperature of 35°C for 3 hours under no agitation to complete polymerization.

After the end of the reaction, an organic phase was separated, diluted with methylene chloride, rinsed, made acidic with hydrochloric acid and rinsed, the obtained product was injected into a kneader filled with hot water when the conductivity of a water phase became almost the same as that of ion exchange water, and methylene chloride was evaporated under agitation to obtain a polycarbonate powder. After dehydration, the powder was dried at 120 °C for 12 hours in a hot air circulation drier to obtain a polycarbonate powder.

A-2: polycarbonate powder having a viscosity average molecular weight of 22,500 obtained by the following method

This polycarbonate powder was obtained in the same manner as A-1 except that the amount of the 11 % methylene chloride solution of p-tert-butylphenol was changed to 125 parts.

A- 3: polycarbonate powder having a branch structure and a viscosity average molecular weight of 25,100 obtained by the following method

2,340 parts of ion exchange water, 947 parts of a 25 % sodium hydroxide aqueous solution and 0.7 part of hydrosulfite were fed to a reactor equipped with a thermometer, a stirrer and a reflux condenser, 710 parts of bisphenol A was dissolved under agitation (bisphenol A solution), 2,299 parts of methylene chloride, 112 parts of a 48.5 % sodium hydroxide aqueous solution and 38.1 parts (1.00 mol%) of an aqueous solution prepared by dissolving 1,1,1-tris (4-hydroxyphenyl) ethane in a 14 % sodium hydroxide aqueous solution to a concentration of 25 % were added, and 354 parts of phosgene was blown into the reactor at 15 to 25°C for about 90 minutes to carry out a phosgene reaction.

After the end of the phosgene reaction, 219 parts of a 11 % methylene chloride solution of p-tert-butylphenol and 88 parts of a 48.5 % sodium hydroxide aqueous solution were added, stirring was suspended, the resulting solution was left to stand for 10 minutes and separated, stirring was resumed to emulsify the solution, and five minutes after that, the obtained emulsion was treated 35 times of bath at a revolution of 1,200 rpm by means of a homomixer (manufactured by PRIMIX Corporation) to obtain highly emulsified dope. This highly emulsified dope was reacted in a polymerization tank (having a stirrer) at a temperature of 35°C for 3 hours under no agitation to complete polymerization.

After the end of the reaction, an organic phase was separated, diluted with methylene chloride, rinsed, made acidic with hydrochloric acid and rinsed, the obtained product was injected into a kneader filled with hot water when the conductivity of a water phase became almost the same as that of ion exchange water, and methylene chloride was evaporated under agitation to obtain a polycarbonate powder. After dehydration, the powder was dried at 120°C for 12 hours in a hot air circulation drier to obtain a polycarbonate powder having a branch structure.

A-4: polycarbonate powder having a branch structure and a viscosity average molecular weight of 20,300 obtained by the following method

This polycarbonate powder having a branch structure was obtained in the same manner as A-3 except that the amount of the 11 % methylene chloride solution of p-tert-butylphenol was changed to 261 parts.

(component B)

B-1: polycarbonate-polydiorganosiloxane copolymer powder having a viscosity average molecular weight of 19,100 obtained by the following method

21,591 parts of ion exchange water and 3,674 parts of a 48.5 % sodium hydroxide aqueous solution were fed to a reactor equipped with a thermometer, a stirrer and a reflux condenser, 3,880 parts of 2,2-bis(4-hydroxyphenyl)propane (bisphenol A) as the dihydroxy compound (I) constituting the carbonate unit represented by the above formula [1] and 7.6 parts of hydrosulfite were dissolved, 14,565 parts (14 moles based on 1 mole of the dihydroxy compound (I)) of methylene chloride was added, and 1,900 parts of phosgene was blown into the reactor at 22 to 30°C for about 60 minutes under agitation.

Thereafter, a solution prepared by dissolving 1,131 parts of a 48.5 % sodium hydroxide aqueous solution and 108 parts of p-tert-butylphenol in 800 parts of methylene chloride was added, and a solution prepared by dissolving 204 parts of a polydiorganosiloxane compound represented by the following formula [8] as the dihydroxyaryl-terminated polydiorganosiloxane (II) having an average number of repetitions of the dimethylsiloxane unit constituting the unit represented by the above formula [3] of about 37 in 1,600 parts of methylene chloride was added under agitation at a rate which ensured that the ratio of the dihydroxyaryl-terminated polydiorganosiloxane (II) became 0.0008 mol/min based on 1 mole of the dihydric phenol (I) to be emulsified and violently stirred again. Under agitation, 4.3 parts of triethylamine was added while the temperature of the reaction solution was 26°C, and stirring was continued for 1 hour at a temperature of 26 to 31°C to terminate the reaction.

After the end of the reaction, an organic phase was separated, diluted with methylene chloride, rinsed, made acidic with hydrochloric acid and rinsed, the obtained product was injected into a kneader filled with hot water when the conductivity of a water phase became almost the same as that of ion exchange water, and methylene chloride was evaporated under agitation to obtain a polycarbonate-polydiorganosiloxane copolymer powder.

After dehydration, the powder was dried at 120°C for 12 hours in a hot air circulation drier to obtain a polycarbonate-polydiorganosiloxane copolymer powder. (polydiorganosiloxane component content of 4.1 %, polydiorganosiloxane domain size of 10 nm, viscosity average molecular weight of 19,100).

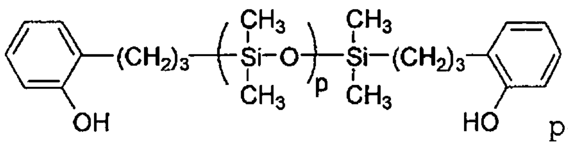

[8]

p=about 37

B-2: polycarbonate-polydiorganosiloxane copolymer powder having a viscosity average molecular weight of 19,400 obtained by the following method

This polycarbonate-polydiorganosiloxane copolymer powder was obtained in the same manner as B-1 except that 430 parts of a dihydroxyaryl-terminated polydiorganosiloxane having a number of repetitions of the dimethylsiloxane unit constituting the polycarbonate constituent unit of about 37 was used and the agitation time was changed to 45 minutes (polydiorganosiloxane component content of 8.2 %, polydiorganosiloxane domain size of 13 nm, viscosity average molecular weight of 19,400).

B-3: polycarbonate-polydiorganosiloxane copolymer powder having a viscosity average molecular weight of 19,200 obtained by the following method

This polycarbonate-polydiorganosiloxane copolymer powder was obtained in the same manner as B-1 except that the average number of repetitions of the dimethylsiloxane unit constituting the polycarbonate constituent unit was changed to about 100. (polydiorganosiloxane component content of 4.2 %, polydiorganosiloxane domain size of 25 nm, viscosity average molecular weight of 19,200). B-4: polycarbonate-polydiorganosiloxane copolymer powder having a viscosity average molecular weight of 19,200 obtained by the following method

This polycarbonate-polydiorganosiloxane copolymer powder was obtained in the same manner as B-1 except that the amount of the polydiorganosiloxane compound was changed to 2 parts. (polydiorganosiloxane component content of 0.04 %, polydiorganosiloxane domain size of 2 nm, viscosity average molecular weight of 19,200).

B-5: polycarbonate-polydiorganosiloxane copolymer powder having a viscosity average molecular weight of 19,600 obtained by the following method

This polycarbonate-polydiorganosiloxane copolymer powder was obtained in the same manner as B-1 except that the average number of repetitions of the dimethylsiloxane unit constituting the polycarbonate constituent unit was changed to about 150. (polydiorganosiloxane component content of 4.2 %, polydiorganosiloxane domain size of 38 nm, viscosity average molecular weight of 19,600). B-6: polycarbonate-polydiorganosiloxane copolymer powder having a viscosity average molecular weight of 18,900 obtained by the following method

This polycarbonate-polydiorganosiloxane copolymer powder was obtained in the same manner as B-1 except that the average number of repetitions of the dimethylsiloxane unit constituting the polycarbonate constituent unit was changed to about 13. (polydiorganosiloxane component content of 4.2 %, polydiorganosiloxane domain size of 1.0 nm, viscosity average molecular weight of 18,900). B-7: polycarbonate-polydiorganosiloxane copolymer powder having a viscosity average molecular weight of 19,200 obtained by the following method

This polycarbonate-polydiorganosiloxane copolymer powder was obtained in the same manner as B-1 except that the average number of repetitions of the dimethylsiloxane unit constituting the polycarbonate constituent unit was changed to 13 and the amount of the polydiorganosiloxane compound was changed to 2 parts. (polydiorganosiloxane component content of 0.04 %, polydiorganosiloxane domain size of 0.3 nm, viscosity average molecular weight of 19,200).

B-8: polycarbonate-polydiorganosiloxane copolymer powder having a viscosity average molecular weight of 18,500 obtained by the following method

This polycarbonate-polydiorganosiloxane copolymer powder was obtained in the same manner as B-1 except that the average number of repetitions of the dimethylsiloxane unit constituting the polycarbonate constituent unit was changed to about 200. (polydiorganosiloxane component content of 4.2 %, polydiorganosiloxane domain size of 48 nm, viscosity average molecular weight of 18,500).

(Component C)

C-1: bead-like crosslinked silicone (TSR9002 (trade name) of Momentive Performance Materials Japan LLC, average particle diameter of 2 μm)
C-2: bead-like crosslinked acrylic particle (MBX-5 (trade name) of Sekisui Plastics Co., Ltd., average particle diameter of 5 μm)
C-3: bead-like crosslinked acrylic particle (SDP-S225 (trade name) of Toagosei Chemical Industry Co., Ltd., average particle diameter of 2 μm)

(other components)

D-1: phosphoric acid ester comprising resorcinol bis[di(2,6-dimethylphenyl)phosphate] as the main component (PX-200 (trade name) of Daihachi Chemical Industry Co., Ltd.)
D-2: perfluorobutanesulfonic acid potassium salt (MEGAFAC F-114P (trade name) of DIC Corporation)
E-1: mixture of polytetrafluoroethylene particles and a styrene-acrylic copolymer (SN3307 (trade name) of Shine Polymer Technology Co., Ltd.)
E-2: mixture of polytetrafluoroethylene particles and a styrene-acrylic copolymer (SN3300B7 (trade name) of Shine Polymer Technology Co., Ltd.)
F-1: Sandstab Powder (P-EPQ (trade name) of Clariant Japan K.K.)
F-2: hindered phenol-based antioxidant (Irganox 1076 (trade name) of Ciba Specialty Chemicals)
G-1: UV absorbent (KEMISORB 79 (trade name) of Chemipro Kasei Kaisha, Ltd.)
H-1: fluorescent brightener (Hakkol PSR (trade name) of Hakkol Chemical Co., Ltd.)

Effect of the Invention

The light-diffusing resin composition of the present invention exhibits excellent light diffusion property and hue since polydiorganosiloxane domains form a specific aggregation structure in a molded article thereof. Therefore, it can be widely used in the fields of optical parts, electric and electronic equipment and automobiles. Stated more specifically,

it can be widely used for lighting covers, diffusion plates for displays and glass substitutes.

## Claims

1. A light-diffusing resin composition comprising 100 parts by weight of a resin component containing a polycarbonate (component A) and a polycarbonate-polydiorganosiloxane copolymer (component B) and 0.05 to 10.0 parts by weight of a light diffusing agent (component C), wherein
the component B is a polycarbonate-polydiorganosiloxane copolymer in which polydiorganosiloxane domains having an average size of 0.5 to 40 nm are existent in a polycarbonate matrix, the average size of the polydiorganosiloxane domains being measured by a small angle X-ray scattering (SAXS) method, wherein the component C is silicone crosslinked particles having an average particle diameter of 0.01 to 50 μm, wherein the average particle diameter indicated a 50% value (D50) of an integral particle size distribution obtained by a laser diffraction/scattering method.

2. The resin composition according to claim 1, wherein the component B is a polycarbonate-polydiorganosiloxane copolymer containing a unit represented by the following formula [1] and a unit represented by the following formula [3].

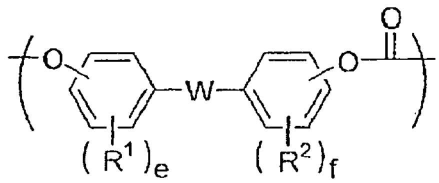 [1]

[In the above formula [1], $R^1$ and $R^2$ are each independently a group selected from the group consisting of hydrogen atom, halogen atom, alkyl group having 1 to 18 carbon atoms, alkoxy group having 1 to 18 carbon atoms, cycloalkyl group having 6 to 20 carbon atoms, cycloalkoxy group having 6 to 20 carbon atoms, alkenyl group having 2 to 10 carbon atoms, aryl group having 3 to 14 carbon atoms, aryloxy group having 3 to 14 carbon atoms, aralkyl group having 7 to 20 carbon atoms, aralkyloxy group having 7 to 20 carbon atoms, nitro group, aldehyde group, cyano group and carboxyl group, and may be the same or different when there are a plurality of $R^1$' s and a plurality of $R^2$'s, "e" and "f" are each an integer of 1 to 4, and W is a single bond or at least one group selected from the group consisting of groups represented by the following formulas [2].

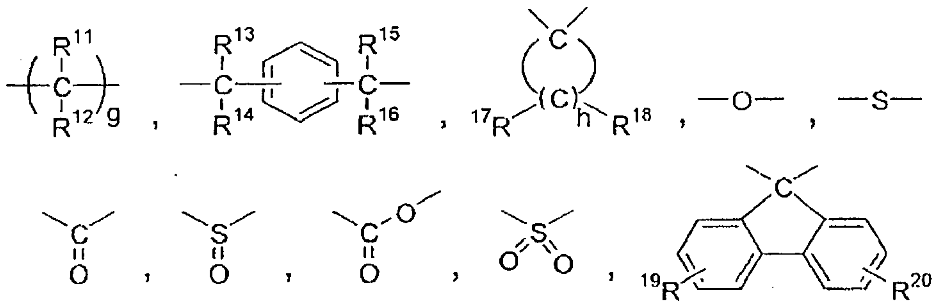 [2]

(In the above formulas [2], $R^{11}$, $R^{12}$, $R^{13}$, $R^{14}$, $R^{15}$, $R^{16}$, $R^{17}$ and $R^{18}$ are each independently a group selected from the group consisting of hydrogen atom, alkyl group having 1 to 18 carbon atoms, aryl group having 3 to 14 carbon atoms and aralkyl group having 7 to 20 carbon atoms, $R^{19}$ and $R^{20}$ are each independently a group selected from the group consisting of hydrogen atom, halogen atom, alkyl group having 1 to 18 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 3 to 14 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group, and may be the same or different when there are a plurality of $R^{19}$' s and a plurality of $R^{20}$'s, "g" is an integer of 1 to 10, and "h" is an integer of 4 to 7.)

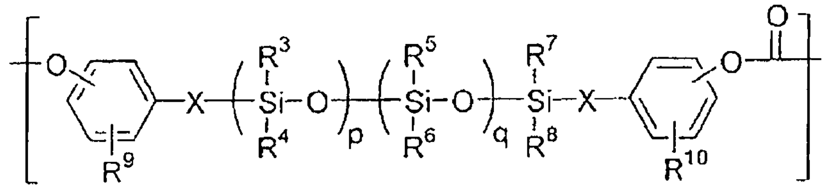

[3]

(In the above formula [3], $R^3$, $R^4$, $R^5$, $R^6$, $R^7$ and $R^8$ are each independently a hydrogen atom, alkyl group having 1 to 12 carbon atoms, or substituted or nonsubstituted aryl group having 6 to 12 carbon atoms, $R^9$ and $R^{10}$ are each independently a hydrogen atom, halogen atom, alkyl group having 1 to 10 carbon atoms or alkoxy group having 1 to 10 carbon atoms, "p" is a natural number, "q" is 0 or a natural number, (p+q) is a natural number of not more than 150, and X is a diavalent aliphatic group having 2 to 8 carbon atoms.)

3. The resin composition according to claim 2, wherein the content of a unit represented by the following formula [4] contained in the formula [3] is 0.001 to 1.0 wt% based on the total weight of the resin composition.

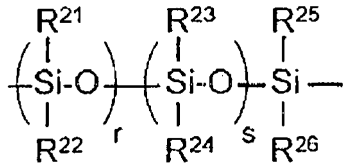

[4]

(In the above formula [4], $R^{21}$, $R^{22}$, $R^{23}$, $R^{24}$, $R^{25}$ and $R^{26}$ are identical to $R^3$, $R^4$, $R^5$, $R^6$, $R^7$ and $R^8$ of the formula [3], respectively, and "r" and "s" are the same as "p" and "q" in the formula [3], respectively.)

4. The resin composition according to claim 2, wherein the content of the unit represented by the formula [4] contained in the formula [3] is 0.01 to 0.2 wt% based on the total weight of the resin composition.

5. The resin composition according to claim 1, wherein the content of the component B is 0.01 to 10.0 parts by weight based on 100 parts by weight of the resin component.

6. The resin composition according to claim 1 whose 2 mm-thick smooth flat plate having an arithmetic average roughness (Ra) of not more than 0.03 μm has a haze of 95 to 99.9 %.

7. A molded article formed from the resin composition of any one of claims 1 to 6.

8. The molded article according to claim 7 which is a lighting apparatus or display apparatus.

## Patentansprüche

1. Lichtstreuende Harzzusammensetzung, umfassend 100 Gewichtsteile einer Harzkomponente, enthaltend ein Polycarbonat (Komponente A) und ein Polycarbonat-Polydiorganosiloxan-Copolymer (Komponente B) und 0,05 bis 10,0 Gewichtsteile eines lichtstreuenden Mittels (Komponente C), wobei
die Komponente B ein Polycarbonat-Polydiorganosiloxan-Copolymer ist, in dem Polydiorganosiloxan-Domänen eine durchschnittliche Größe von 0,5 bis 40 nm aufweisen und in einer Polycarbonatmatrix vorliegen,
wobei die durchschnittliche Größe der Polydiorganosiloxan-Domänen gemessen wird durch ein Kleinwinkel-Röntgenstreuungs-(SAXS)-Verfahren,
wobei die Komponente C Silikon-vernetzte Teilchen sind mit einem durchschnittlichen Teilchendurchmesser von 0,01 bis 50 μm, wobei der durchschnittliche Teilchendurchmesser angegeben ist als 50%-Wert (D50) einer durch ein Laser-Beugungs/Streuungs-Verfahren erhaltenen integralen Teilchengrößenverteilung.

2. Harzzusammensetzung nach Anspruch 1, wobei die Komponente B ein Polycarbonat-Polydiorganosiloxan-Copolymer ist, enthaltend eine Einheit der folgenden Formel [1] und eine Einheit der folgenden Formel [3].

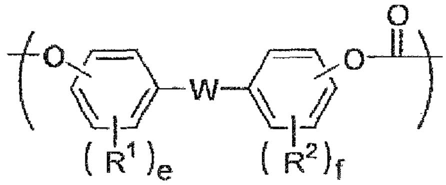

[1]

[In der obigen Formel [1] gilt: $R^1$ und $R^2$ sind jeweils unabhängig eine Gruppe, ausgewählt aus der Gruppe, bestehend aus Wasserstoffatom, Halogenatom, Alkylgruppe mit 1 bis 18 Kohlenstoffatomen, Alkoxygruppe mit 1 bis 18 Kohlenstoffatomen, Cycloalkylgruppe mit 6 bis 20 Kohlenstoffatomen, Cycloalkoxygruppe mit 6 bis 20 Kohlenstoffatomen, Alkenylgruppe mit 2 bis 10 Kohlenstoffatomen, Arylgruppe mit 3 bis 14 Kohlenstoffatomen, Aryloxygruppe mit 3 bis 14 Kohlenstoffatomen, Aralkylgruppe mit 7 bis 20 Kohlenstoffatomen, Aralkyloxygruppe mit 7 bis 20 Kohlenstoffatomen, Nitrogruppe, Aldehydgruppe, Cyanogruppe und Carboxylgruppe, und die gleich oder verschieden sein können, wenn eine Mehrzahl von $R^1$ und eine Mehrzahl von $R^2$ vorhanden sind, "e" und "f" sind jeweils eine ganze Zahl von 1 bis 4, und W ist eine Einfachbindung oder mindestens eine Gruppe, ausgewählt aus der Gruppe, bestehend aus Gruppen der folgenden Formeln [2].

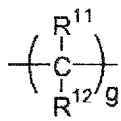 , 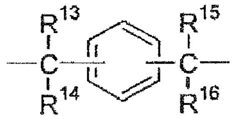 , 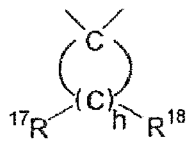 , —O— , —S—

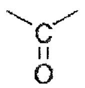 , 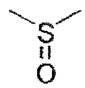 , 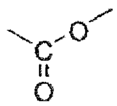 , 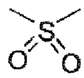 , 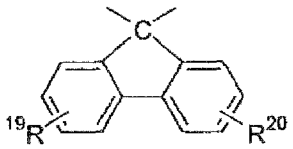

[2]

(In den obigen Formeln [2] gilt: $R^{11}$, $R^{12}$, $R^{13}$, $R^{14}$, $R^{15}$, $R^{16}$, $R^{17}$ und $R^{18}$ sind jeweils unabhängig eine Gruppe, ausgewählt aus der Gruppe, bestehend aus Wasserstoffatom, Alkylgruppe mit 1 bis 18 Kohlenstoffatomen, Arylgruppe mit 3 bis 14 Kohlenstoffatomen und Aralkylgruppe mit 7 bis 20 Kohlenstoffatomen, $R^{19}$ und $R^{20}$ sind jeweils unabhängig eine Gruppe, ausgewählt aus der Gruppe, bestehend aus Wasserstoffatom, Halogenatom, Alkylgruppe mit 1 bis 18 Kohlenstoffatomen, Alkoxygruppe mit 1 bis 10 Kohlenstoffatomen, Cycloalkylgruppe mit 6 bis 20 Kohlenstoffatomen, Cycloalkoxygruppe mit 6 bis 20 Kohlenstoffatomen, Alkenylgruppe mit 2 bis 10 Kohlenstoffatomen, Arylgruppe mit 3 bis 14 Kohlenstoffatomen, Aryloxygruppe mit 6 bis 10 Kohlenstoffatomen, Aralkylgruppe mit 7 bis 20 Kohlenstoffatomen, Aralkyloxygruppe mit 7 bis 20 Kohlenstoffatomen, Nitrogruppe, Aldehydgruppe, Cyanogruppe und Carboxylgruppe, und können gleich oder verschieden sein, wenn eine Mehrzahl von $R^{19'}$ und eine Mehrzahl von $R^{20}$ vorhanden ist, "g" ist eine ganze Zahl von 1 bis 10, und "h" ist eine ganze Zahl von 4 bis 7.)

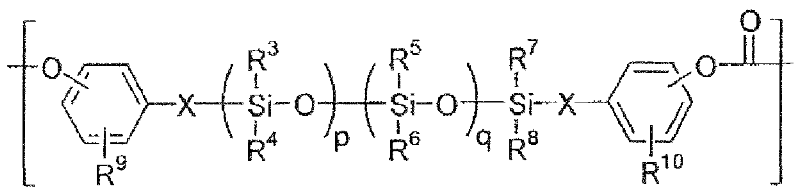

[3]

(In der obigen Formel [3] gilt: $R^3$, $R^4$, $R^5$, $R^6$, $R^7$ und $R^8$ sind jeweils unabhängig ein Wasserstoffatom, Alkylgruppe mit 1 bis 12 Kohlenstoffatomen, oder substituierte oder nicht substituierte Arylgruppe mit 6 bis 12 Kohlenstoffatomen, $R^9$ und $R^{10}$ sind jeweils unabhängig ein Wasserstoffatom, Halogenatom, Alkylgruppe mit 1 bis 10 Kohlenstoffatomen oder Alkoxygruppe mit 1 bis 10 Kohlenstoffatomen, "p" ist eine natürliche Zahl, "q" ist 0 oder eine natürliche Zahl, (p+q) ist eine natürliche Zahl von nicht mehr als 150 und X ist eine zweiwertige aliphatische Gruppe mit 2 bis 8 Kohlenstoffatomen.)

3. Harzzusammensetzung nach Anspruch 2, wobei der Gehalt der in der Formel [3] enthaltenen Einheit der folgenden Formel [4] 0,001 bis 1,0 Gew.-%, bezogen auf das Gesamtgewicht der Harzzusammensetzung, beträgt.

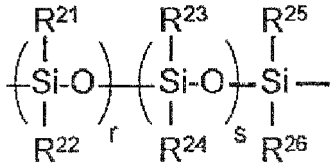 [4]

(In der obigen Formel [4] gilt: $R^{21}$, $R^{22}$, $R^{23}$, $R^{24}$, $R^{25}$ und $R^{26}$ sind jeweils identisch zu $R^3$, $R^4$, $R^5$, $R^6$, $R^7$ und $R^8$ in der Formel [3], und "r" und "s" sind jeweils das Gleiche wie "p" und "q" in der Formel[3].)

**4.** Harzzusammensetzung nach Anspruch 2, wobei der Gehalt der in der Formel [3] enthaltenen Einheit der Formel [4] 0,01 bis 0,2 Gew.-%, bezogen auf das Gesamtgewicht der Harzzusammensetzung, beträgt.

**5.** Harzzusammensetzung nach Anspruch 1, wobei der Gehalt der Komponente B 0,01 bis 10,0 Gewichtsteile, bezogen auf 100 Gewichtsteile der Harzzusammensetzung, beträgt.

**6.** Harzzusammensetzung nach Anspruch 1, deren 2 mm-dicke, glatte, ebene Platte eine arithmetische durchschnittliche Rauheit (Ra) von nicht mehr als 0,03 μm aufweist und eine Trübung von 95 bis 99,9% aufweist.

**7.** Geformter Gegenstand aus der Harzzusammensetzung nach einem der Ansprüche 1 bis 6.

**8.** Geformter Gegenstand nach Anspruch 7, der eine Beleuchtungsvorrichtung oder Anzeigevorrichtung ist.

## Revendications

**1.** Composition de résine diffusant la lumière comprenant 100 parties en poids d'un composant de résine contenant un polycarbonate (composant A) et un copolymère polycarbonate-polydiorganosiloxane (composant B) et 0,05 à 10,0 parties en poids d'un agent de diffusion de lumière (composant C), dans laquelle
le composant B est un copolymère polycarbonate-polydiorganosiloxane dans lequel des domaines polydiorganosiloxane ayant une taille moyenne de 0,5 à 40 nm sont présents dans une matrice polycarbonate, la taille moyenne des domaines polydiorganosiloxane étant mesurée par un procédé de diffusion des rayons X aux petits angles (SAXS),
dans laquelle le composant C est des particules réticulées de silicone ayant un diamètre particulaire moyen de 0,01 à 50 μm, dans laquelle le diamètre particulaire moyen indiquait une valeur à 50 % (D50) d'une distribution granulométrique intégrale obtenue par un procédé de diffraction/diffusion laser.

**2.** Composition de résine selon la revendication 1, dans laquelle le composant B est un copolymère polycarbonate-polydiorganosiloxane contenant un motif représenté par la formule [1] suivante et un motif représenté par la formule [3] suivante.

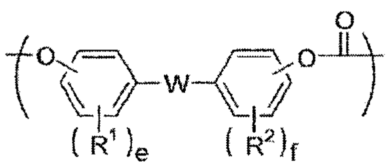 [1]

[Dans la formule [1] qui précède, $R^1$ et $R^2$ sont chacun indépendamment un groupe choisi dans le groupe constitué d'un atome d'hydrogène, un atome d'halogène, un groupe alkyle ayant 1 à 18 atomes de carbone, un groupe alcoxy ayant 1 à 18 atomes de carbone, un groupe cycloalkyle ayant 6 à 20 atomes de carbone, un groupe cycloalcoxy ayant 6 à 20 atomes de carbone, un groupe alcényle ayant 2 à 10 atomes de carbone, un groupe aryle ayant 3 à 14 atomes de carbone, un groupe aryloxy ayant 3 à 14 atomes de carbone, un groupe aralkyle ayant 7 à 20 atomes de carbone, un groupe aralkyloxy ayant 7 à 20 atomes de carbone, un groupe nitro, un groupe aldéhyde, un groupe cyano et un groupe carboxyle, et peuvent être identiques ou différents lorsqu'il y a une pluralité de $R^1$ et une pluralité de $R^2$, « e » et « f » sont chacun un nombre entier de 1 à 4, et W est une liaison simple ou au moins un groupe choisi dans le groupe constitué de groupes représentés par les formules [2] suivantes.

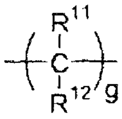 , 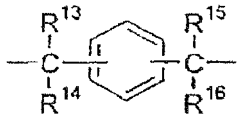 , 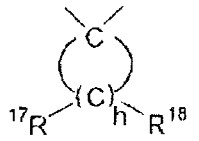 , —O— , —S— [2]

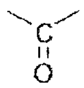 , 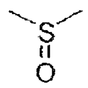 , 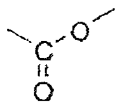 , 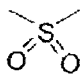 , 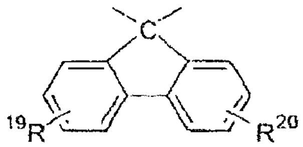

(Dans les formules [2] qui précèdent, $R^{11}$, $R^{12}$, $R^{13}$, $R^{14}$, $R^{15}$ $R^{16}$, $R^{17}$ et $R^{18}$ sont chacun indépendamment un groupe choisi dans le groupe constitué d'un atome d'hydrogène, un groupe alkyle ayant 1 à 18 atomes de carbone, un groupe aryle ayant 3 à 14 atomes de carbone et un groupe aralkyle ayant 7 à 20 atomes de carbone, $R^{19}$ et $R^{20}$ sont chacun indépendamment un groupe choisi dans le groupe constitué d'un atome d'hydrogène, un atome d'halogène, un groupe alkyle ayant 1 à 18 atomes de carbone, un groupe alcoxy ayant 1 à 10 atomes de carbone, un groupe cycloalkyle ayant 6 à 20 atomes de carbone, un groupe cycloalcoxy ayant 6 à 20 atomes de carbone, un groupe alcényle ayant 2 à 10 atomes de carbone, un groupe aryle ayant 3 à 14 atomes de carbone, un groupe aryloxy ayant 6 à 10 atomes de carbone, un groupe aralkyle ayant 7 à 20 atomes de carbone, un groupe aralkyloxy ayant 7 à 20 atomes de carbone, un groupe nitro, un groupe aldéhyde, un groupe cyano et un groupe carboxyle, et peuvent être identiques ou différents lorsqu'il y a une pluralité de $R^{19}$ et une pluralité de $R^{20}$, « g » est un nombre entier de 1 à 10, et « h » est un nombre entier de 4 à 7).

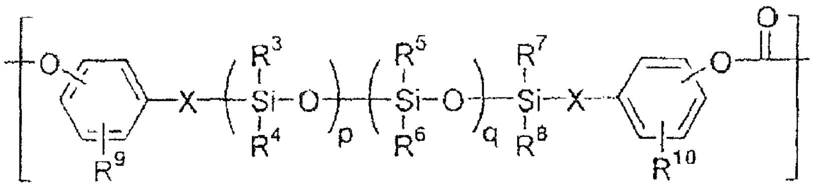 [3]

(Dans la formule [3] qui précède, $R^3$, $R^4$, $R^5$, $R^6$, $R^7$ et $R^8$ sont chacun indépendamment un atome d'hydrogène, un groupe alkyle ayant 1 à 12 atomes de carbone, ou un groupe aryle substitué ou non substitué ayant 6 à 12 atomes de carbone, $R^9$ et $R^{10}$ sont chacun indépendamment un atome d'hydrogène, un atome d'halogène, un groupe alkyle ayant 1 à 10 atomes de carbone ou un groupe alcoxy ayant 1 à 10 atomes de carbone, « p » est un nombre naturel, « q » est 0 ou un nombre naturel, (p+q) est un nombre naturel n'excédant pas 150, et X est un groupe aliphatique divalent ayant 2 à 8 atomes de carbone).

3. Composition de résine selon la revendication 2, dans laquelle la teneur d'un motif représenté par la formule [4] suivante contenu dans la formule [3] va de 0,001 à 1,0 % en poids sur la base du poids total de la composition de résine.

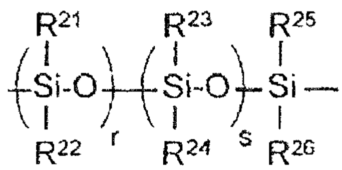 [4]

(Dans la formule [4] qui précède, $R^{21}$, $R^{22}$, $R^{23}$, $R^{24}$, $R^{25}$ et $R^{26}$ sont identiques à $R^3$, $R^4$, $R^5$, $R^6$, $R^7$ et $R^8$ de formule [3], respectivement, et « r » et « s » sont identiques à « p » et « q » dans la formule [3], respectivement).

4. Composition de résine selon la revendication 2, dans laquelle la teneur du motif représenté par la formule [4] contenu dans la formule [3] va de 0,01 à 0,2 % en poids sur la base du poids total de la composition de résine.

5. Composition de résine selon la revendication 1, dans laquelle la teneur du composant B va de 0,01 à 10,0 parties en poids sur la base de 100 parties en poids du composant de résine.

6. Composition de résine selon la revendication 1, dont une plaque plate lisse d'une épaisseur de 2 mm ayant une

rugosité moyenne arithmétique (Ra) n'excédant pas 0,03 μm a une turbidité de 95 à 99,9 %.

**7.** Article moulé formé à partir de la composition de résine selon l'une quelconque des revendications 1 à 6.

**8.** Article moulé selon la revendication 7, qui est un appareil d'éclairage ou un appareil d'affichage.

Fig. 1

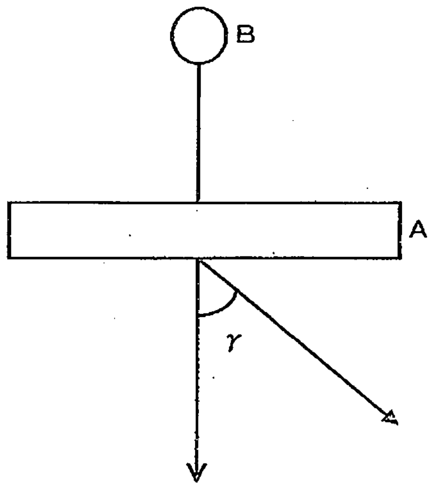

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001214049 A
- JP 2001323149 A
- JP 2007302793 A
- JP 2007016079 A
- JP 10046022 A
- WO 2004076541 A
- JP 6145520 A
- JP 60258263 A
- JP 63154744 A
- JP 4272957 A
- JP 6220210 A
- JP 8188653 A
- JP 9095583 A
- JP 11029679 A
- JP 7233160 A